# EUROPEAN PATENT SPECIFICATION

(11) **EP 2 955 942 B1**
(45) Date of publication and mention of the grant of the patent: **05.02.2020**
(21) Application number: 13876114.3
(22) Date of filing: 06.12.2013
(51) Int. Cl.: H04W 4/06, H04L 12/18, H04W 48/16, H04W 52/02, H04W 72/00, H04W 76/40, H04W 76/11, H04W 4/08, H04W 52/00, H04W 74/00, H04W 76/00, H04W 84/12

(54) **MULTICAST INFORMATION TRANSMISSION METHOD AND DEVICE**
VERFAHREN UND VORRICHTUNG ZUR ÜBERTRAGUNG VON MULTICASTINFORMATIONEN
PROCÉDÉ ET DISPOSITIF DE TRANSMISSION DE DONNÉES EN MULTIDIFFUSION

(30) Priority: 01.03.2013 CN 201310066677; 05.03.2013 CN 201310069902
(43) Date of publication of application: 16.12.2015
(73) Proprietor: Huawei Technologies Co., Ltd., Longgang District Shenzhen, Guangdong 518129 (CN)
(72) Inventor: YANG, Xun, Shenzhen Guangdong 518129 (CN); ZHAO, Mu, Shenzhen Guangdong 518129 (CN); JIANG, Yanping, Shenzhen Guangdong 518129 (CN)
(74) Representative: Pfenning, Meinig & Partner mbB
(86) International application number: PCT/CN2013/088706
(87) International publication number: WO 2014/131300

(56) References cited:
- EP-A1- 2 876 840
- WO-A1-2010/124417
- WO-A1-2013/137823
- CN-A- 101 707 739
- CN-A- 101 835 102
- "IEEE Std 802.11-2012", WIRELESS LAN MEDIUM ACCESS CONTROL (MAC) AND PHYSICAL LAYER (PHY) SPECIFICATIONS, 29 March 2012 (2012-03-29), XP068050195, ISBN: 978-0-7381-7211-8

## Description

### TECHNICAL FIELD

The present invention relates to communications technologies, and in particular, to a multicast information transmission method and a device.

### BACKGROUND

In an 802.11ah application scenario, a maximum of 6000 sensor stations (STA) can be supported. For example, these STAs may be separately arranged on water meters, electricity meters, and gas meters. These water, electricity, and gas meters may belong to different or same water, electricity, and gas retail companies. By using a wireless access point (AP), these different or same water, electricity, and gas retail companies may send information to these water, electricity, and gas meters according to same or different periods, or update these water, electricity, and gas meters at any time as required. The foregoing application scenario shows that in the 802.11ah scenario, APs are required to send multicast information of different content to different STAs according to different periods.

In the prior art, in order to reduce the number of times that the STA listens to a beacon frame, a flexible multicast service (FMS) mode is proposed. In the FMS mode, a STA negotiates with an AP in advance, to determine a to-be-used multicast period, the STA receives multicast information according to the multicast period that is determined by means of negotiation, and the AP uses an 8-bit FMS ID in a beacon frame, to identify a multicast period to which to-be-sent multicast information belongs. The number of times that a STA listens to a beacon frame is reduced in this manner; however, if the STA receives a beacon frame, the STA also needs to receive all multicast information after the beacon frame, and then select multicast information that belongs to the STA from all the multicast information. It can be learned that regardless of which one of the modes a STA works in, a problem that resources of the STA are wasted still exists.

IEEE Std 802.11-2012 discloses a multicast transmission scheme in WLAN called FMS, wherein the flexible multicast service enables a non-AP STA to request an alternate delivery traffic indication map (DTIM) delivery interval for one or more sets of group addressed streams that the non-AP STA receives. Using FMS Service, the non-AP STA wake up at the alternate DTIM interval rather than every DTIM and save power significantly when a non-AP STA receives group addressed traffic. For more information, go to IEEE Std 802.11-2012 Chapter 10.2.1.4.

EP2876840A1 discloses a multicast information transmission method. The method includes: AP sends a delivery traffic indication map (DTIM) beacon frame to a station (STA), wherein the DTIM beacon frame contains Multicast ID. Multicast ID is used to indicate multicast groups, so that the STA receives multicast information of a multicast group to which the STA belongs in a receiving interval corresponding to the multicast group to which the STA belongs. Using the method above, STAs can reduce transmission resource.

### SUMMARY

Embodiments of the present invention provide multicast information transmission methods and devices, as defined in the claims.

In the multicast information sending and receiving methods and devices provided by the embodiments of the present invention, by using a DTIM beacon frame to indicate a multicast group that has multicast information to be sent, an AP successively sends multicast information of multicast groups, which have multicast information to be sent, at a sending interval according to a value order of multicast IDs of the multicast groups that have multicast information to be sent, so that one or more STAs receive multicast information of a multicast group to which the STAs belong at corresponding receiving intervals according to a position of a multicast ID of the multicast group to which the STAs belong in the value order of the multicast IDs of the multicast groups that have multicast information to be sent. This solves a problem in the prior art that each STA receives all multicast information after a beacon frame and reduces resource waste of the STA caused by this problem.

In multicast identifier sending and receiving methods and devices provided by the embodiments of the present invention, by using an AID as a MID of a multicast group, an AP sends a MID of a multicast group to which a STA belongs to the STA, thereby solving, to some degree, a problem in the prior art that application of multicast is limited due to a limited number of multicast periods supported by an FMS ID.

### BRIEF DESCRIPTION OF DRAWINGS

FIG. 1 is a flowchart of a multicast information sending method according to an embodiment of the present invention;
FIG. 2 is a flowchart of a multicast information sending method according to another embodiment of the present invention;
FIG. 2b is a flowchart of a multicast information sending method according to still another embodiment of the present invention;
FIG. 2c is a flowchart of a multicast information sending method according to yet another embodiment of the present invention;
FIG. 3 is a schematic structural diagram of an AID according to an embodiment of the present invention;
FIG. 4 is a flowchart of a multicast information receiving method according to an embodiment of the present invention;
FIG. 5 is a schematic diagram of an order in which multicast information is received according to an embodiment of the present invention;
FIG. 6 is a schematic diagram of another order in which multicast information is received according to an embodiment of the present invention;
FIG. 7 is a flowchart of a multicast information receiving method according to another embodiment of the present invention;
FIG. 8 is a flowchart of a multicast identifier sending method according to an embodiment of the present invention;
FIG. 9 is a flowchart of a multicast identifier receiving method according to an embodiment of the present invention;
FIG. 10 is a schematic block diagram of an access point (AP) according to an embodiment of the present invention;
FIG. 11 is a schematic block diagram of an access point (AP) according to another embodiment of the present invention; and
FIG. 12 is a schematic block diagram of a station (STA) according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

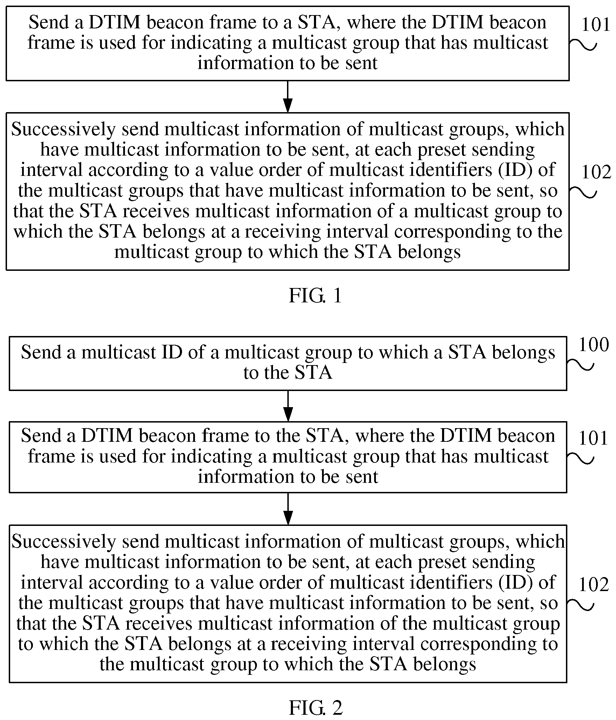

FIG. 1 is a flowchart of a multicast information sending method according to an embodiment of the present invention. This embodiment is executed by an AP but is not limited thereto. As shown in FIG. 1, the method in this embodiment includes:
Step 101: Send a DTIM beacon frame to a STA, where the DTIM beacon frame is used for indicating a multicast group that has multicast information to be sent.
Step 102: Send the multicast information of the multicast group, which has multicast information to be sent, at each preset sending interval, so that the STA receives multicast information of a multicast group to which the STA belongs within a receiving interval corresponding to the multicast group to which the STA belongs.

In embodiments of the present invention, multicast information of multicast groups that have multicast information to be sent is successively sent at each preset sending interval according to a value order of multicast identifiers (ID) of the multicast groups that have multicast information to be sent. The value order of the multicast IDs may be a descending order, or may be an ascending order. The value order of the multicast IDs according to which the AP sends the multicast information is the same as a value order of the multicast IDs according to which STAs receive the multicast information. Either both the AP and the STAs follow a descending order, or both the AP and the STAs follow an ascending order.

In this embodiment, each multicast group has one multicast ID, used for uniquely identifying the multicast group. These multicast IDs are association identifiers AIDs used for identifying multicast groups, and are referred to as MIDs (Multicast AID). The AP stores multicast information of each multicast group that has multicast information to be sent. When the AP needs to send multicast information to a STA in at least one multicast group, the AP first sends a beacon frame to the STA. A type indication bit in the beacon frame indicates that the beacon frame is a DTIM beacon frame. The DTIM beacon frame indicates, on one hand, that multicast information is to be sent after the DTIM beacon frame and indicates, on the other hand, a multicast group that has multicast information to be sent. Then the AP successively sends multicast information of the multicast groups, which have multicast information to be sent, at each sending interval according to a value order of MIDs of the multicast groups, so that the STA can receive multicast information of a multicast group to which the STA belongs at a corresponding receiving interval according to a MID of the multicast group to which the STA belongs, and does not receive multicast information of other multicast groups. This solves a problem in the prior art that after receiving a beacon frame, a STA needs to receive all multicast information after the beacon frame, and helps reduce resource waste of the STA caused by this problem. This method is particularly applicable to a STA that has a requirement for low power consumption.

In the foregoing embodiment, before step 101, the method may further include: sending a multicast ID of a multicast group to which the STA belongs to the STA.

Before sending the multicast information of the multicast groups, which have multicast information to be sent, to the STA according to the value order of the multicast IDs of the multicast groups, the AP may send the multicast ID of the multicast group to which the STA belongs to the STA, so that the STA learns in advance the multicast ID of the multicast group to which the STA belongs, and then receives multicast information of the multicast group to which the STA belongs at a corresponding receiving interval according to the multicast ID of the multicast group to which the STA belongs. The STA locally stores the received multicast ID of the multicast group to which the STA belongs.

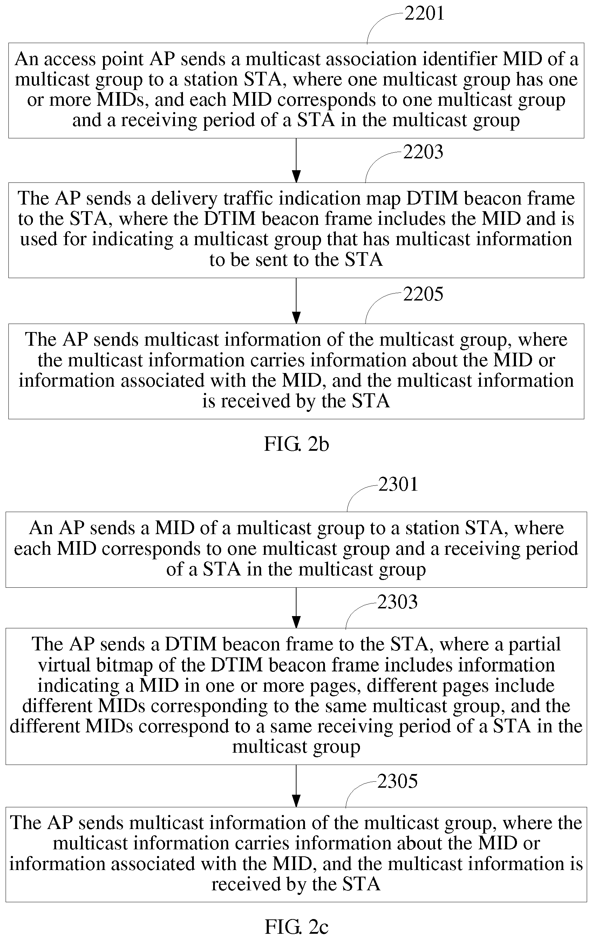

Further, in an optional implementation manner, a MID for identifying a multicast group is not unique. In practice, it is allowed that multiple MIDs identify a same multicast group. Therefore, another embodiment of the present invention provides another multicast information sending method. Refer to FIG. 2b, which is a flowchart of the method. This embodiment is executed by an AP but is not limited thereto. As shown in FIG. 2b, the method in this embodiment includes:
S2201: An access point (AP) sends a multicast association identifier (MID) of a multicast group to a station (STA), where one multicast group has one or more MIDs, and each MID corresponds to one multicast group and a receiving period of a STA in the multicast group.
S2203: The AP sends a delivery traffic indication map (DTIM) beacon frame to the STA, where the DTIM beacon frame includes the MID and is used for indicating a multicast group that has multicast information to be sent to the STA.
S2205: The AP sends the multicast information of the multicast group, where the multicast information carries information about the MID or information associated with the MID, and the multicast information is received by the STA.

In the foregoing embodiment, different MIDs corresponding to a same multicast group correspond to different multicast information receiving periods, and the information associated with the MID may be a MAC address of the multicast group. When a STA is in a sleep mode, the STA wakes up to receive the multicast information. A MID indicates a multicast group that has multicast information to be sent to the STA, so that the STA wakes up to receive the multicast information. The access point (AP) may send a multicast association identifier (MID) of a multicast group to all or some stations STAs. According to a system requirement, in specific implementation, STAs belonging to a same multicast group may need to wake up in different periods to receive multicast information. A multicast information receiving period may also be referred to as a multicast information listen interval (multicast listen interval). By using different MIDs to identify STAs that belong to a same multicast group but have different receiving periods, same multicast information can be flexibly sent in different periods. An example for description is as follows: Both STA_1 and STA_2 belong to a multicast group A, but STA_1 and STA_2 need to receive multicast information in different periods. STA_1 may wake up every DTIM beacon frame to receive multicast information, while STA_2 wakes up every two DTIMs to receive multicast information once. Therefore, MID_1 is allocated to STA_1, and MID_2 is allocated to STA_2. When receiving a DTIM beacon frame and finding that there is a data packet of MID_1, STA_1 receives the data packet. When receiving a DTIM beacon frame that indicates that there is data of MID_2, STA_2 receives the data. Both MID_1 and MID_2 correspond to the multicast group A.

In an optional implementation manner, a preset sending interval may be an average length of time for sending multicast information. Based on this, after sending the DTIM beacon frame to the STA, the AP sequentially allocates a time period whose length is equal to the average length of time for sending the multicast information as a sending interval to each multicast group, which has multicast information to be sent, according to a value order of MIDs of multicast groups that have multicast information to be sent, and sends multicast information of a corresponding multicast group at an allocated sending interval, so that the multicast information of the multicast groups is sent successively according to the value order of the MIDs.

Optionally, the average length of time for sending multicast information may be a preset empirical value. In addition, the average length of time for sending multicast information may also be computed by the AP according to a volume of to-be-sent multicast information and a sending rate of each multicast group after the AP determines the multicast groups that have multicast information to be sent and before the AP sends the multicast information.

In an optional implementation manner, the foregoing sending interval may be a beacon frame interval (Beacon Interval). The beacon frame interval herein refers to an interval between two beacon frames. The beacon frame herein includes a TIM beacon frame of which an indication bit is a traffic indication map (TIM), and also includes a DTIM beacon frame. In this implementation manner, the AP may send a TIM beacon frame after the current DTIM beacon frame and before a next DTIM beacon frame. Accordingly, that the AP sends multicast information of the multicast group after the current DTIM beacon frame may specifically be that: the AP sends the multicast information of the multicast group after the current DTIM beacon frame and the TIM beacon frame between the current DTIM beacon frame and the next DTIM beacon frame, or sends the information at a beacon frame interval of the current DTIM beacon frame.

The AP may indicate, in the DTIM beacon frame, MIDs of all multicast groups of which multicast information needs to be received before the next DTIM beacon frame. A partial virtual bitmap in a conventional DTIM beacon frame only indicates a STA that has unicast data. When a MID is used to identify a multicast group, the partial virtual bitmap in the DTIM beacon frame may also be used to indicate a multicast group that has multicast information. In addition, when a DTIM beacon frame includes information that indicates a page, a block, and a sub-block to which a STA having unicast information belongs, when a MID is used to identify a multicast group, the information in the DTIM beacon frame may also be used to indicate a page, a block, and a sub-block to which a multicast group having multicast information belongs. Further, for how to use a page, a block, and a sub-block in a TIM, refer to a proposal Specification Framework of TGah of the IEEE 802.11ah standard. The number of TIM beacon frames that the AP sends between two DTIM beacon frames may be adaptively determined. If the number of TIM beacon frames between two DTIM beacon frames is greater than or equal to the number of the multicast groups that have multicast information to be sent, preferably, the AP may send multicast information of one multicast group after each TIM beacon frame, but the present invention is not limited thereto. If the number of TIM beacon frames between two DTIM beacon frames is less than the number of the multicast groups that have multicast information to be sent, the AP may simultaneously send multicast information of at least two multicast groups after a certain TIM beacon frame or the current TIM beacon frame, so as to ensure that multicast information of each multicast group can be successfully sent to a STA.

In specific implementation, in S2201, before sending the multicast information of the multicast groups, which have multicast information to be sent, to the STA according to the value order of the multicast IDs of the multicast groups, the AP may send a MID of a multicast group to which the STA belongs to the STA, so that the STA learns in advance the MID of the multicast group to which the STA belongs, and then receives multicast information of the multicast group to which the STA belongs at a corresponding receiving interval according to the MID of the multicast group to which the STA belongs. The STA locally stores the received MID of the multicast group to which the STA belongs.

In an optional implementation manner, the AP may actively initiate allocation of the multicast ID, that is, the AP actively sends the MID of the multicast group to which the STA belongs to the STA.

In another optional implementation manner, the STA may actively request, from the AP, the MID of the multicast group to which the STA belongs. An implementation manner of step 101 includes: receiving, by the AP, information sent by the STA and used for requesting a MID, and sending, by the AP according to the received information for requesting a MID, a MID of a multicast group to which the STA belongs to the STA. The information sent by the STA and used for requesting a MID may be a multicast Media Access Control (MAC) address or other information that can uniquely identify the multicast group to which the STA belongs. The AP identifies, according to the information sent by the STA and used for requesting a MID, the multicast group to which the STA belongs, and then determines the MID of the multicast group to which the STA belongs. Optionally, after receiving the information for requesting a multicast ID, the AP may allocate a MID to the STA in real time, or may directly obtain a pre-allocated multicast ID.

In this implementation manner, a specific implementation manner for sending, by the STA, the information for requesting a MID to the AP is: encapsulating, by the STA, the information for requesting a MID into a request message, and sending the request message to the AP. A specific manner for receiving, by the AP, the information sent by the STA and used for requesting a MID is: receiving, by the AP, the request message sent by the STA, where the request message includes the information for requesting a multicast ID, and specifically obtaining, by the AP from the request message, the information for requesting a multicast ID. Optionally, the request message may be a newly-added message. A specific newly-added request message may be a request message referred to as a MID Request. Refer to information frame 1 in the following specific embodiment:

**Information frame 1**

| | | |
|---|---|---|
| Version information | MID Request | MID Request IE |

The MID Request may at least include: version information, a MID request, and a MID Request IE (Information Element). The version information is used to indicate which version of a standard the message belongs to, and is not a necessary information field. The MID request is used for indicating that the information is MID Request information, which is an information frame for requesting a MID. The MID Request IE (MID request information element) carries specific information about the request. For the MID Request IE, refer to information frame 2 in the following embodiment:

**Information frame 2**

| | | | | | |
|---|---|---|---|---|---|
| Element ID | Element length | Multicast MAC address 1 | Multicast MAC address 1 Expected receiving period | Multicast MAC address 2 | Multicast MAC address 2 Expected receiving period |

The MID request information element may include an ID of the IE, a length of the IE, a MAC address of a multicast group whose MID is expected, and an expected period (multicast listen interval) for receiving data of the multicast group. It may be allowed that there are multiple MAC addresses of multicast groups whose MID is expected and multiple expected periods for receiving the data of the multicast group. That is, it is allowed that one STA requests MIDs of multiple multicast groups in one request message. In specific implementation, the MAC address of the multicast group is necessary and the AP allocates the MID according to the MAC address of the multicast group, and other information fields are optional.

In this implementation manner, another specific implementation manner for sending, by the STA, the information for requesting a MID to the AP is: adding, by the STA, a new information element (IE) to an existing control frame or an existing management frame or an existing data frame, encapsulating the information for requesting a MID into the newly-added IE, and sending the existing control frame or the existing management frame or the existing data frame to the AP. A specific newly-added IE is a MID Request IE, or information carried in the MID Request IE is included in an existing AID Request IE. Another specific method is putting the newly-added IE in an existing message frame, which may specifically be putting the newly-added IE in an Association Request or a Reassociation Request or an AID Switch Request. A specific manner for receiving, by the AP, the information sent by the STA and used for requesting a MID is: receiving, by the AP, the existing control frame or the existing management frame or the existing data frame sent by the STA, where the newly-added IE in the existing control frame or the existing management frame or the existing data frame includes the information for requesting a multicast ID, and obtaining, by the AP from the newly-added IE in the existing control frame or the existing management frame or the existing data frame, the information for requesting a MID.

In an optional implementation manner, a specific implementation manner for sending, by the AP, the multicast ID of the multicast group to which the STA belongs to the STA is: encapsulating, by the AP, the multicast ID of the multicast group to which the STA belongs into a newly-added management frame or a newly-added control frame, and sending the management frame or the control frame to the STA. A specific newly-added message frame may be a message frame referred to as a MID Response. The frame is used by the access point (AP) to send the MID of the multicast group to the station (STA). In this embodiment, the MID information frame may be considered as a MID Response because the MID is sent after the STA requests the MID. For a MID information frame, refer to information frame 3 in the following specific embodiment:

**Information frame 3**

| | | |
|---|---|---|
| Version information | MID response | MID Response IE |

The MID Response may include fields: version information, a MID response, and a MID Response IE. The version information is used for indicating which version of a standard the message belongs to, and this field is not necessary, for example, the version information may be pre-negotiated by means of default or system setting. The MID response is used for indicating that the information is a MID response information frame.

For a specific embodiment of the MID Response IE, refer to the following information frame 4:

**Information frame 4**

| | | | | | | | |
|---|---|---|---|---|---|---|---|
| Element ID | Element length | Multicast MAC address 1 | Multicast MAC address 1 Allocated MID1 | Multicast MAC address 1 Allocated MID2 | Multicast MAC address 1 Allowed receiving period | Multicast MAC address 1 MID valid time | State information |

The MID Response IE may include information: an ID of the IE, a length of the IE, a multicast MAC address, a corresponding allocated MID, a period (multicast listen interval) in which receiving the multicast information is allowed, a MID valid time, and status information. If the STA requests MIDs of multiple multicast groups, there may be multiple multicast MAC addresses, corresponding allocated MIDs, periods (multicast listen intervals) in which receiving the multicast information is allowed, and MID valid times, and status information parts in the IE. In application, the MAC address of the multicast group or the period for the STA to receive the multicast information of the multicast group included in the MID request information element is necessary because the AP allocates the MID according to the MAC address or the period for the STA to receive the multicast information of the multicast group.

In implementation, one or more MIDs may be allocated according to a corresponding multicast MAC address, or an allocated multicast ID may include a page indication bitmap in combination with a MID. The page indication bitmap indicates one or more pages to which a current MID is allocated. The page herein corresponds to a page in a TIM structure. The AP may allocate MIDs scattered in multiple pages to a STA according to a multicast information receiving period of the STA. In this way, in a case in which a partial virtual bitmap in one DTIM indicates data receiving of the STA in only one page, a requirement of the STA to receive multicast information in different periods is met.

Referring to FIG. 2c, still another multicast information sending method in an embodiment of the present invention includes:
S2301: An AP sends a MID of a multicast group to a station (STA), where each MID corresponds to one multicast group and a receiving period of a STA in the multicast group.
S2303: The AP sends a DTIM beacon frame to the STA, where a partial virtual bitmap of the DTIM beacon frame includes information indicating a MID in one or more pages, different pages include different MIDs corresponding to the same multicast group, and the different MIDs correspond to a same receiving period of a STA in the multicast group.
S2305: The AP sends multicast information of the multicast group, where the multicast information carries information about the MID or information associated with the MID, and the multicast information is received by the STA.

An example for description is as follows: When a partial virtual bitmap in a DTIM beacon frame indicates only one page, and all four pages are cycled according to a cycle order of 1, 2, 3, and 4, if STA_1 needs to receive each DTIM beacon frame, while STA_2 needs to perform reception every two DTIM beacon frame periods, four MIDs need to be allocated to STA_1, where the four MIDs are separately mapped to the four pages, so as to ensure that STA_1 can learn, according to each DTIM beacon frame, whether there is data to be received. Only two MIDs need to be allocated to STA_2, where the two MIDs are separately mapped to page 1 and page 3, so as to ensure that STA_2 can receive multicast information in an excepted receiving period. Pages to which the MIDs are mapped may be different according to different orders in which pages indicated by a TIM bitmap in the DTIM beacon frame are cycled. In order to reduce an IE length, a MID corresponding to a same period and a same multicast group may be mapped to same blocks and sub-blocks of different pages. When the MID is allocated, it is only required to indicate, by using a page indication bitmap, one or more pages to which the current MID is mapped. In addition, a part of a MID may be used to indicate locations of the blocks and the sub-blocks to which the MID is mapped. For further description, a MID valid time refers to whether a specified MID takes effect immediately or after a time period, where the time period may be several Beacon Intervals (beacon intervals), or a time length of several Beacons including a TIM or several Beacons including a DTIM. When the AP successfully allocates a MID to a STA, status information of the STA should indicate the successful allocation. If the allocation is not successful, the status information should indicate the unsuccessful allocation, and may further indicate a corresponding error reason.

In an optional implementation manner, another specific implementation manner for allocating, by the AP, the MID of the multicast group to which the STA belongs to the STA is: adding, by the AP, a new IE to an existing management frame or an existing control frame or an existing data frame, encapsulating the multicast ID of the multicast group to which the STA belongs into the newly-added IE, and sending the existing management frame or the existing control frame or the existing data frame to the STA. A specific newly-added IE is a MID Response IE, or information in a MID Response IE is included in an existing AID Response IE. Another specific method for including the newly-added IE in an existing message frame is adding the newly-added IE to an Association Response and/or a Reassociation Response and/or an AID Switch Response.

In an optional implementation manner, after receiving the multicast ID of the multicast group to which the STA belongs, the STA may send an acknowledgment (ACK) message to the AP, so that the AP can learn in time whether the STA successfully receives the multicast ID of the multicast group to which the STA belongs. Based on this, after the sending, by the AP, the multicast ID of the multicast group to which the STA belongs to the STA, the method includes: receiving, by the AP, an ACK message sent by the STA. Optionally, on a premise that the STA needs to send the ACK message, if the AP fails to receive the ACK message within a period of time, the AP needs to re-send the multicast ID of the multicast group to which the STA belongs to the STA.

In an optional implementation manner, the AP may further initiate a process of invalidating the multicast ID. Based on this, the method in this embodiment further includes: sending, by the AP, a multicast ID invalidation message to the STA, where the multicast ID invalidation message includes an invalidation indication for indicating invalidation of the multicast ID of the multicast group to which the STA belongs. Optionally, the multicast ID invalidation message may further include the multicast ID that needs to be invalidated (that is, the multicast ID of the multicast group to which the STA belongs). Correspondingly, the STA receives the multicast ID invalidation message sent by the AP, so as to learn that the multicast ID of the multicast group to which the STA belongs needs to be invalidated, and removes, based on the multicast ID invalidation message, an association with the multicast ID. Optionally, after receiving the multicast ID invalidation message, the STA may send an ACK message to the AP, so as to notify the AP that the STA already receives the multicast ID invalidation message. Correspondingly, after sending the multicast ID invalidation message to the STA, the AP receives the ACK message sent by the STA. On a premise that it is required to send the ACK message, if the AP fails to receive the ACK message within a period of time, the AP needs to re-send the multicast ID invalidation message to the corresponding STA of which the ACK message fails to be received by the AP.

An optional implementation manner for sending, by the AP, the multicast ID invalidation message to the STA includes: encapsulating, by the AP by using a newly-added management frame or a newly-added control frame, the multicast ID invalidation message into the newly-added management frame or the newly-added control frame, and sending the newly-added management frame or the newly-added control frame to the STA.

Another optional implementation manner for sending, by the AP, the multicast ID invalidation message to the STA includes: adding, by the AP, a new IE to an existing management frame or control frame or data frame, encapsulating the multicast ID invalidation message into the newly-added IE, and sending the existing management frame or control frame or data frame to the STA.

In an optional implementation manner, the process for invalidating the multicast ID may also be initiated by the STA. For example, when the STA needs to remove an association with the multicast group to which the STA belongs, the STA sends a multicast ID invalidation request to the AP, so as to request removal of the association with the multicast group. Based on this, the method in this embodiment further includes: receiving, by the AP, the multicast ID invalidation request sent by the STA, where the multicast ID invalidation request optionally includes the multicast ID of the multicast group to which the STA belongs, that is, the multicast ID that needs to be invalidated, and then invalidating, according to the received multicast ID invalidation request, the multicast ID of the multicast group to which the STA belongs. Optionally, after receiving the multicast ID invalidation request, the AP may further send an ACK message to the STA.

An optional implementation manner for sending, by the STA, the multicast ID invalidation request to the AP includes: encapsulating, by the STA by using a request message, the multicast ID invalidation request into the request message, and sending the request message to the AP. Correspondingly, a specific implementation manner for receiving, by the AP, the multicast ID invalidation request sent by the STA includes: receiving, by the AP, the request message sent by the STA, and obtaining the multicast ID invalidation request from the request message. The request message herein may also be a newly-added message.

Another optional implementation manner for sending, by the STA, the multicast ID invalidation request to the AP includes: adding, by the STA, a new IE to an existing control frame or management frame or data frame, encapsulating the multicast ID invalidation request into the newly-added IE, and sending the existing control frame or management frame or data frame to the AP. Correspondingly, a specific implementation manner for receiving, by the AP, the multicast ID invalidation request sent by the STA includes: receiving, by the AP, the existing control frame or management frame or data frame sent by the STA, and obtaining the multicast ID invalidation request from the newly-added IE in the existing control frame or management frame or data frame.

In an optional implementation manner, the AP may further initiate changing of the multicast ID. Based on this, the method in this embodiment further includes: sending, by the AP, a multicast ID change message to the STA, where the multicast ID change message includes a changed multicast ID of the multicast group to which the STA belongs. Optionally, the multicast ID change message may further include the original multicast ID of the multicast group to which the STA belongs. For a multicast group, an original multicast ID of the multicast group is a multicast ID that needs to be changed, while a new multicast ID used by the multicast group is a changed multicast ID. The STA receives the multicast ID change message sent by the AP, so as to learn that the multicast ID needs to be changed and determine the changed multicast ID. Optionally, after receiving the multicast ID change message sent by the AP, the STA may send an ACK message to the AP. On a premise that it is required to send the ACK message, if the AP fails to receive the ACK message within a period of time, the AP needs to re-send the multicast ID change message to the corresponding STA of which the ACK message fails to be received by the AP.

An optional implementation manner for sending, by the AP, the multicast ID change message to the STA includes: encapsulating, by the AP by using a newly-added management frame or a newly-added control frame, the multicast ID change message into the newly-added management frame or the newly-added control frame, and sending the newly-added management frame or the newly-added control frame to the STA. A specific implementation method is that the AP may complete the changing of the MID by using a MID Response.

Another optional implementation manner for sending, by the AP, the multicast ID change message to the STA includes: adding, by the AP, a new IE to an existing management frame or control frame or data frame, encapsulating the multicast ID change message into the newly-added IE, and sending the existing management frame or control frame or data frame to the STA. A specific newly-added IE is a MID Response IE, or information in a MID Response IE is included in an existing AID Response IE. A specific method for including the newly-added IE in an existing message frame is adding the newly-added IE to an Association Response and/or a Reassociation Response and/or an AID Switch Response.

In an optional implementation manner, the changing of the multicast ID may also be initiated by the STA. For example, when the STA needs to change the multicast ID, the STA may send a multicast ID change request to the AP, and then the STA receives a multicast ID change message, which is sent by the AP according to the multicast ID change request, where the multicast ID change message includes a changed multicast ID of the multicast group to which the STA belongs. Based on this, an implementation manner for sending, by the AP, the multicast ID change message to the STA includes: receiving, by the AP, the multicast ID change request sent by the STA, and sending the multicast ID change message to the STA according to the multicast ID change request. The multicast ID change request may include a MAC address or an IP address of the STA or other information that can uniquely identify the STA. Optionally, the AP may allocate a new multicast ID to the STA according to the information carried in the multicast ID change request, and then send the newly-allocated multicast ID as a changed multicast ID to the STA.

An optional implementation manner for sending, by the STA, the multicast ID change request to the AP includes: encapsulating, by the STA by using a newly-added request message, the multicast ID change request into the newly-added request message, and sending the newly-added request message to the AP. Correspondingly, a specific implementation manner for receiving, by the AP, the multicast ID change request sent by the STA includes: receiving, by the AP, the newly-added request message sent by the STA, and obtaining the multicast ID change request from the newly-added request message. A specific newly-added request message may be a MID Request, so as to complete the changing of the MID.

Another optional implementation manner for sending, by the STA, the multicast ID change request to the AP includes: adding, by the STA, a new IE to an existing control frame or management frame or data frame, encapsulating the multicast ID change request into the newly-added IE, and sending the existing control frame or management frame or data frame to the AP. Correspondingly, a specific implementation manner for receiving, by the AP, the multicast ID change request sent by the STA includes: receiving, by the AP, the existing control frame or management frame or data frame sent by the STA, and obtaining the multicast ID change request from the newly-added IE in the existing control frame or management frame or data frame. A specific newly-added IE is a MID Request IE, or information included in a MID Request IE is included in an existing AID Request IE. A specific method for including the newly-added IE in an existing message frame is adding the newly-added IE to an Association Request and/or a Reassociation Request and/or an AID Switch Request.

The foregoing implementation manners provide multiple implementation solutions for sending, by the AP, the multicast ID to the STA, invalidating the multicast ID, and changing the multicast ID, thereby implementing management of the multicast ID. The solutions have the advantages of being simple and easy to implement.

Based on the foregoing implementation manners, optionally, multicast IDs of the foregoing multicast groups (including the multicast group to which the STA belongs) may be MAC addresses or may be FMS IDs, but the present invention is not limited thereto.

Based on the foregoing implementation manners, optionally, multicast IDs of the foregoing multicast groups (including the multicast group to which the STA belongs) are at least one Association ID. The AID herein may be an AID in AID space except an AID used as a unicast AID. Specifically, the AP may determine which AIDs are used as unicast AIDs and which AIDs are used as multicast IDs. That is, it is only required that the AIDs used as multicast IDs are different from the AIDs used for unicast.

On the basis that a multicast ID of a multicast group is an AID, before the sending, by the AP, the multicast ID of the multicast group to which the STA belongs to the STA, the method may include: mapping, by the AP, the multicast ID of the multicast group to which the STA belongs, to one AID; or mapping, by the AP, the multicast ID of the multicast group to which the STA belongs, to at least two AIDs.

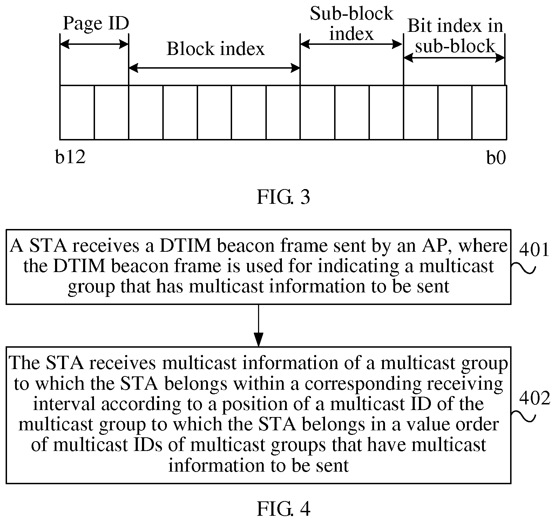

In the prior art, in order to support more STAs, AIDs of STAs are divided into different groups according to pages, blocks, and sub-blocks. FIG. 3 shows a structure of an AID supporting four pages. In the structure of the AID supporting four pages, there may be 32 Blocks in one Page, one Block has eight Sub-blocks, and one Sub-block can support eight STAs. Therefore, an AID of such a structure can support a maximum of 8192 STAs. Because there is sufficient AID space, in this implementation manner, some AIDs are used as multicast IDs, so that no extra multicast ID needs to be set. In this way, a beacon frame does not need to be enlarged to carry a set multicast ID, which facilitates compression of the beacon frame.

Based on the foregoing AID implementation structure, an implementation manner for mapping, by the AP, the multicast ID of the multicast group to which the STA belongs, to one AID is that: the AP may map the multicast ID of the multicast group to which the STA belongs, to any Page, Block, and/or Sub-block of the AID. A same AID may be used for multicast IDs of multiple multicast groups, and the multicast IDs of the multicast groups may be randomly allocated to different Pages, Blocks, and/or Sub-blocks.

Based on the foregoing AID implementation structure, another implementation manner for mapping, by the AP, the multicast ID of the multicast group to which the STA belongs, to one AID is: mapping, by the AP, the multicast ID of the multicast group to which the STA belongs, to a pre-specified page, block, and/or sub-block of the AID. Similarly, a same AID may also be used for multicast IDs of multiple multicast groups, and the multicast IDs of the multicast groups may be allocated to pre-specified Pages, Blocks, and/or Sub-blocks. In this manner, multicast IDs of all multicast groups can belong to a same Page, Block, or Sub-block, which facilitates management.

Based on the foregoing AID implementation structure, an implementation manner for mapping, by the AP, the multicast ID of the multicast group to which the STA belongs, to at least two AIDs is: mapping, by the AP, the multicast ID of the multicast group to which the STA belongs, to different Pages, Blocks, and/or Sub-blocks of the at least two AIDs. At least two same AIDs may be used for multicast IDs of multiple multicast groups, and the multicast IDs of the multicast groups may be allocated to different Pages, Blocks, and/or Sub-blocks of the at least two AIDs.

Based on the foregoing AID implementation structure, another implementation manner for mapping, by the AP, the multicast ID of the multicast group to which the STA belongs, to at least two AIDs is: mapping, by the AP, the multicast ID of the multicast group to which the STA belongs, to same Pages, Blocks, and/or Sub-blocks of the at least two AIDs. Similarly, at least two same AIDs may be used for multicast IDs of multiple multicast groups, and the multicast IDs of the multicast groups may be allocated to same Pages, Blocks, and/or Sub-blocks of the at least two AIDs.

In conclusion, a manner for using an AID as a multicast ID of a multicast group includes but is not limited to:
(1) One AID corresponds to one or more multicast IDs of a multicast group, and the multicast ID or these multicast IDs may be randomly allocated to different Pages, Blocks, and/or Sub-blocks.
(2) One AID corresponds to one or more multicast IDs of a multicast group, and same Pages, Blocks, and/or Sub-blocks are used in all AIDs used for identifying a multicast ID of a multicast group.
(3) One multicast ID may be identified by using multiple AIDs, and same or different Pages, Blocks, and/or Sub-blocks may be used in these AIDs.

It should be noted that in the embodiments of the present invention, multicast IDs indicated by using an AID may be continuous or may be discontinuous.

In the foregoing implementation manners, an AID is used as a multicast ID of a multicast group, the AID used as the multicast ID can be specified by an AP, and a STA does not need to negotiate with the AP. Therefore, the present invention has greater flexibility during implementation compared with a solution in which an FMS ID is used in the prior art. In addition, the AID used as the multicast ID has no requirement on a multicast information sending period, and not only supports periodically sent multicast information but also supports randomly sent multicast information, and therefore the present invention is applicable to more application scenarios. Besides, the AID used as the multicast ID has richer resources than the FMS ID, thereby solving, to some degree, a problem that application of multicast is limited due to a limited number of multicast periods supported by the FMS ID.

Based on the foregoing description, in an optional implementation manner, a manner for indicating, by the DTIM beacon frame, the multicast group that has multicast information to be sent is: indicating, by using a partial virtual bitmap in the DTIM beacon frame, the multicast group that has multicast information to be sent. In the prior art, a partial virtual bitmap is used for indicating that a STA corresponding to an AID needs to receive downlink data in the case of unicast. In this implementation manner, because an AID is used as a multicast ID, in the case of multicast, an existing partial virtual bitmap in a beacon frame may be used to indicate a multicast group that has a multicast information to be sent. An implementation manner is that: if a manner in which an AID is used as a multicast ID of a multicast group is used, that is, one multicast ID corresponds to multiple AIDs, when the AP needs to send multicast information of the multicast group, the multicast group is identified by using an AID that corresponds to the multicast ID and is in a partial virtual bitmap used for identifying unicast data in a beacon frame. For example, if a bit corresponding to an AID in the partial virtual bitmap is 1, it indicates that a multicast group that uses the AID as a multicast ID has multicast information to be sent; and if bits corresponding to multiple AIDs in the partial virtual bitmap are 1, it indicates that multicast groups that use these AIDs as multicast IDs all have multicast information to be sent. It can be learn that when an AID is used as a multicast ID, an existing bit in a beacon frame may be further used to indicate a multicast group that has multicast information to be sent, so that the beacon frame does not need to be enlarged, which facilitates compression of the beacon frame.

In conclusion, in the multicast information sending method provided by this embodiment of the present invention, an AP successively sends multicast information of multicast groups, which have multicast information to be sent, at a sending interval according to a value order of multicast IDs of the multicast groups that have multicast information to be sent, so that a STA receives multicast information of a multicast group to which the STA belongs within a corresponding receiving interval according to a position of a multicast ID of the multicast group to which the STA belongs in the value order of the multicast IDs of the multicast groups that have multicast information to be sent, thereby solving a problem in the prior art that each STA receives all multicast information after a beacon frame and reducing resource waste of the STA caused by this problem.

FIG. 4 is a flowchart of a multicast information receiving method according to an embodiment of the present invention. As shown in FIG. 4, the method in this embodiment includes:
Step 401: A STA receives a DTIM beacon frame sent by an AP, where the DTIM beacon frame is used for indicating a multicast group that has multicast information to be sent.
Step 402: The STA receives multicast information of a multicast group to which the STA belongs at a corresponding receiving interval according to a position of a multicast ID of the multicast group to which the STA belongs in a value order of multicast IDs of multicast groups that have multicast information to be sent.

In this embodiment, each multicast group has one multicast ID, used for uniquely identifying the multicast group. The AP stores multicast information of each multicast group that has multicast information to be sent. When the AP needs to send multicast information to a STA in at least one multicast group, the AP first sends a beacon frame to the STA. A type indication bit in the beacon frame indicates that the beacon frame is a DTIM beacon frame. By using the DTIM beacon frame, the AP notifies, on one hand, the STA that multicast information is to be sent after the DTIM beacon frame and notifies, on the other hand, the STA of which multicast group or multicast groups have multicast information to be sent. Correspondingly, the STA receives the DTIM beacon frame sent by the AP, parses the received beacon frame to learn the multicast group that has multicast information to be sent, and determines, according to a multicast ID of a multicast group to which the STA belongs, whether the multicast group to which the STA belongs is the multicast group that is indicated in the DTIM beacon frame and has multicast information to be sent. When determining that the multicast group to which the STA belongs is the multicast group that is indicated in the DTIM beacon frame and has multicast information to be sent, the STA prepares to receive the multicast information sent by the AP.

After sending the DTIM beacon frame to the STA, the AP successively sends multicast information of the multicast groups, which have multicast information to be sent, at each sending interval according to a value order of multicast IDs of the multicast groups. The STA uses a processing manner adaptive to that of the AP. That is, the STA determines a position of the multicast ID of the multicast group to which the STA belongs in the value order of the multicast IDs of the multicast groups that are indicated in the DTIM beacon frame and have multicast information to be sent, then determines, according to the position in the value order, a receiving interval corresponding to the multicast group to which the STA belongs, and then receives multicast information of the multicast group to which the STA belongs at the corresponding receiving interval, and does not receive multicast information of other multicast groups. This solves a problem in the prior art that after receiving a DTIM beacon frame, a STA needs to receive all multicast information after the DTIM beacon frame, and helps reduce resource waste of the STA caused by this problem. This method is particularly applicable to a STA that has a requirement for low power consumption.

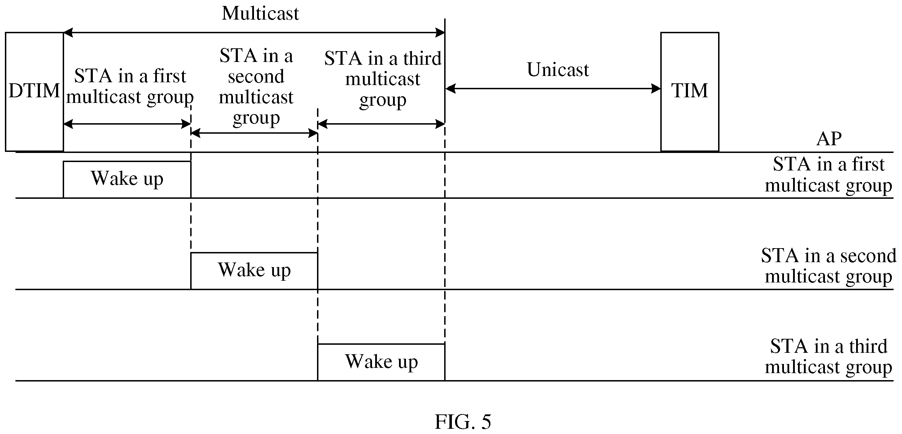

In an optional implementation manner, each receiving interval is an average length of time for sending multicast information. Based on this, a manner for receiving, by the STA, multicast information of a multicast group to which the STA belongs at a corresponding receiving interval according to a position of a multicast ID of the multicast group to which the STA belongs in a value order of multicast IDs of multicast groups that have multicast information to be sent is specifically: determining, by the STA, a wake-up moment of the STA according to the average length of time for sending multicast information and the position of the multicast ID of the multicast group to which the STA belongs in the value order of the multicast IDs of the multicast groups that have multicast information to be sent, and then receiving the multicast information. As shown in FIG. 5, it is assumed that there are three multicast groups that have multicast information to be sent, which are a first multicast group, a second multicast group, and a third multicast group, and a descending value order of multicast IDs of the three multicast groups is sequentially the first multicast group, the second multicast group, and the third multicast group. A manner for receiving, by STAs in the three multicast groups, corresponding multicast information is shown in FIG. 5. A STA in the first multicast group wakes up after a DTIM beacon frame, to receive multicast information that belongs to the STA (that is, multicast information of the first multicast group); a STA in the second multicast group wakes up after waiting for one average length of time for sending multicast information, to receive multicast information that belongs to the STA (that is, multicast information of the second multicast group); and a STA in the third multicast group wakes up after waiting for two average lengths of time for sending multicast information, to receive multicast information that belongs to the STA (that is, multicast information of the third multicast group). Optionally, each time when a STA waits for one average length of time for sending multicast information, the STA may continue to wait for one SIFS. For example, if a STA waits for 2 average lengths of time for sending multicast information, a total waiting time length is (2 average lengths of time for sending multicast information + 2 SIFSs).

Optionally, the average length of time for sending multicast information may be a preset empirical value. In addition, the average length of time for sending multicast information may also be computed by the AP according to a volume of to-be-sent multicast information and a sending rate of each multicast group after the AP determines the multicast groups that have multicast information to be sent and before the AP sends the multicast information, and then the average length of time for sending multicast information is sent to the STA.

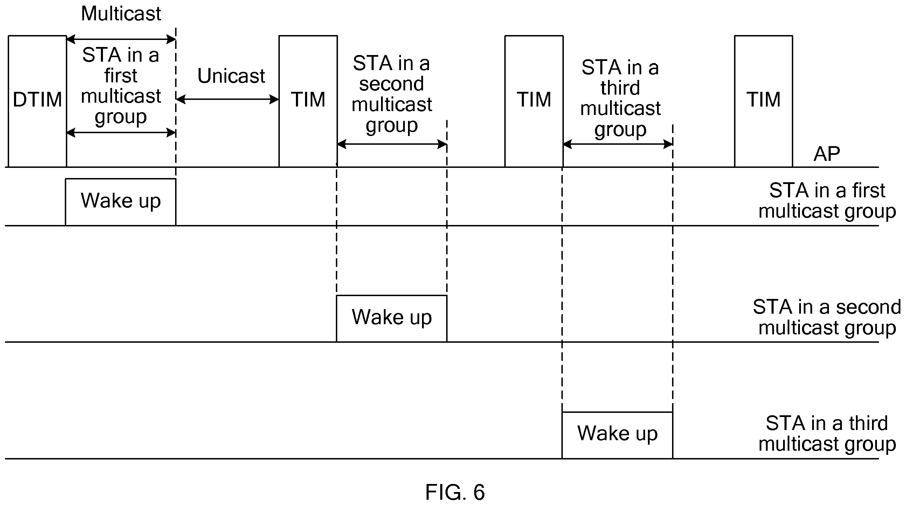

In an optional implementation manner, each receiving interval is a beacon frame interval. The beacon frame interval herein refers to an interval between two beacon frames. The beacon frame herein not only includes a TIM beacon frame but also includes a DTIM beacon frame. After receiving the current DTIM beacon frame, STAs in the multicast groups that have multicast information to be sent may sequentially receive multicast messages after a TIM beacon frame before a next DTIM beacon frame according to the value order of the multicast IDs of the multicast groups to which the STAs belong. Multicast information of one or more multicast groups may be sent after the DTIM beacon frame or the TIM beacon frame. Using FIG. 6 as an example, it is assumed that multicast groups that have multicast information to be sent are a first multicast group, a second multicast group, and a third multicast group, and a descending value order of multicast IDs of the three multicast groups is sequentially: the first multicast group, the second multicast group, and the third multicast group. A STA in the first multicast group wakes up after a current DTIM beacon frame, to receive multicast information that belongs to the STA (that is, multicast information of the first multicast group); a STA in the second multicast group wakes up after a first TIM beacon frame after the current DTIM beacon frame, to receive multicast information that belongs to the STA (multicast information of the second multicast group); and a STA in the third multicast group wakes up after a second TIM beacon frame after the current DTIM beacon frame, to receive multicast information that belongs to the STA (that is, multicast information of the third multicast group). It is noted herein that the number of TIM beacon frames that the AP sends between two DTIM beacon frames may be adaptively determined.

In an optional implementation manner, the multicast IDs may be MAC addresses, FMS IDs, or the like, but the present invention is not limited thereto.

In an optional implementation manner, the multicast IDs are at least one AID. That is, the multicast IDs of the foregoing multicast groups that have multicast information to be sent (including the multicast group to which the STA belongs) are at least one AID. Specifically, the AP may determine which AIDs are used as unicast AIDs and which AIDs are used as multicast IDs. That is, it is only required that the AIDs used as multicast IDs are different from the AIDs used for unicast.

On the basis that a multicast ID is an AID, a manner for indicating, by the DTIM beacon frame, the multicast group that has multicast information to be sent is: indicating, by using a partial virtual bitmap in the DTIM beacon frame, the multicast group that has multicast information to be sent. For example, if a bit corresponding to an AID in the partial virtual bitmap is 1, it indicates that a multicast group that uses the AID as a multicast ID has multicast information to be sent; and if bits corresponding to multiple AIDs in the partial virtual bitmap are 1, it indicates that multicast groups that use these AIDs as multicast IDs all have multicast information to be sent. It can be learned that when an AID is used as a multicast ID, an existing bit in a beacon frame may be further used to indicate a multicast group that has multicast information to be sent, so that the beacon frame does not need to be enlarged, which facilitates compression of the beacon frame.

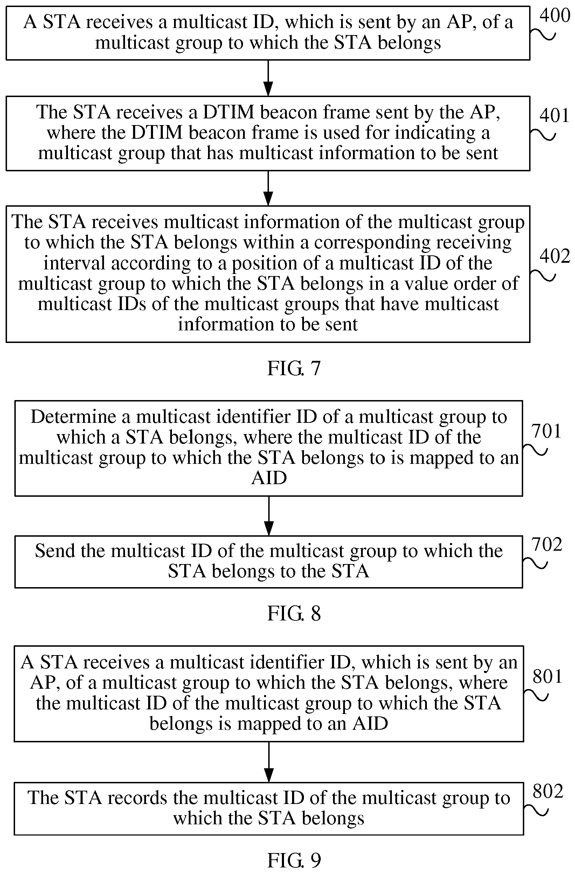

In an optional implementation manner, as shown in FIG. 7, before step 401, the method in this embodiment further includes:
Step 400: A STA receives a multicast ID, which is sent by an AP, of a multicast group to which the STA belongs.

By performing step 400, the STA can learn in advance the multicast ID of the multicast group to which the STA belongs, and then the STA receives the multicast information of the multicast group to which the STA belongs at the corresponding receiving interval according to the multicast ID of the multicast group to which the STA belongs.

In an optional implementation manner, the AP may actively initiate allocation of the multicast ID, that is, the AP actively sends the multicast ID of the multicast group to which the STA belongs to the STA. The STA may specifically receive the multicast ID, which is actively sent by the AP, of the multicast group to which the STA belongs.

In an optional implementation manner, the STA may actively request, from the AP, the multicast ID of the multicast group to which the STA belongs. The receiving, by the STA, the multicast ID, which is sent by the AP, of the multicast group to which the STA belongs includes: sending, by the STA, information for requesting a multicast ID to the AP, and then receiving, by the STA, a multicast ID of a multicast group to which the STA belongs, which is sent by the AP according to the information for requesting a multicast ID. The information sent by the STA and used for requesting a multicast ID may be a MAC address or an IP address of the STA, or other information that can uniquely identify the STA. The AP identifies the STA according to the information sent by the STA and used for requesting a multicast ID, and then determines the multicast ID of the multicast group to which the STA belongs. Optionally, after receiving the information for requesting a multicast ID, the AP may allocate a multicast ID to the STA in real time, or may directly obtain a pre-allocated multicast ID.

An optional implementation manner for sending, by the STA, the information for requesting a multicast ID to the AP includes: encapsulating, by the STA, the information for requesting a multicast ID into a request message, and sending the request message to the AP. Optionally, the request message may be a newly-added message.

Another optional implementation manner for sending, by the STA, the information for requesting a multicast ID to the AP includes: adding, by the STA, a new IE to an existing control frame or an existing management frame or an existing data frame, encapsulating the information for requesting a multicast ID into the newly-added IE, and sending the existing control frame or the existing management frame or the existing data frame to the AP.

An optional implementation manner for receiving, by the STA, the multicast ID, which is sent by the AP, of the multicast group to which the STA belongs includes: receiving, by the STA, a newly-added management frame or a newly-added control frame sent by the AP, where the newly-added management frame or the newly-added control frame includes the multicast ID of the multicast group to which the STA belongs, and specifically obtaining, by the STA, the multicast ID of the multicast group to which the STA belongs from the received newly-added management frame or newly-added control frame.

Another optional implementation manner for receiving, by the STA, the multicast ID, which is sent by the AP, of the multicast group to which the STA belongs includes: receiving, by the STA, an existing management frame or an existing control frame or an existing data frame sent by the AP, where a newly-added IE in the existing management frame or the existing control frame or the existing data frame includes the multicast ID of the multicast group to which the STA belongs, and specifically obtaining, by the STA, the multicast ID of the multicast group to which the STA belongs from the newly-added IE in the existing management frame or the existing control frame or the existing data frame.

In an optional implementation manner of this embodiment, after receiving the multicast ID, which is sent by the AP, of the multicast group to which the STA belongs, the STA may send an ACK message to the AP. In this way, the AP can learn in time whether the STA receives the multicast ID of the multicast group to which the STA belongs. In a case in which the STA is required to send the ACK message, if the AP fails to receive the ACK message within a period of time, the AP needs to re-send the multicast ID of the multicast group to which the STA belongs to the STA.

In an optional implementation manner, the AP may further initiate a process of invalidating the multicast ID. For example, the AP sends a multicast ID invalidation message to the STA, and adds, to the multicast ID invalidation message, an invalidation indication for indicating invalidation of the multicast ID of the multicast group to which the STA belongs. Based on this, the method in this embodiment further includes: receiving, by the STA, the multicast ID invalidation message sent by the AP, so as to learn that the STA needs to remove an association with the multicast group to which the STA belongs, and therefore removing the association with the multicast group. Optionally, after receiving the multicast ID invalidation message, the STA may send an ACK message to the AP, so as to notify the AP that the STA already receives the multicast ID invalidation message. Correspondingly, after sending the multicast ID invalidation message to the STA, the AP receives the ACK message sent by the STA. On a premise that it is required to send the ACK message, if the AP fails to receive the ACK message within a period of time, the AP needs to re-send the multicast ID invalidation message to the corresponding STA of which the ACK message fails to be received by the AP.

An optional implementation manner for sending, by the AP, the multicast ID invalidation message to the STA includes: encapsulating, by the AP by using a newly-added management frame or control frame, the multicast ID invalidation message into the newly-added management frame or control frame, and sending the newly-added management frame or control frame to the STA. Correspondingly, the STA receives the newly-added management frame or control frame or data frame sent by the AP, and obtains the multicast ID invalidation message from the received newly-added management frame or control frame or data frame.

Another optional implementation manner for sending, by the AP, the multicast ID invalidation message to the STA includes: adding, by the AP, a new IE to an existing management frame or control frame or data frame, encapsulating the multicast ID invalidation message into the newly-added IE, and sending the existing management frame or control frame or data frame to the STA. Correspondingly, the STA receives the existing management frame or control frame or data frame sent by the AP, and obtains the multicast ID invalidation message from the received existing management frame or control frame or data frame.

In an optional implementation manner, the process for invalidating the multicast ID may also be initiated by the STA. For example, when the STA needs to remove an association with the multicast group to which the STA belongs, the STA sends a multicast ID invalidation request to the AP, so that the AP invalidates, according to the multicast ID invalidation request, the multicast ID of the multicast group to which the STA belongs. Correspondingly, the AP receives the multicast ID invalidation request sent by the STA. Optionally, the multicast ID invalidation request may include the multicast ID of the multicast group to which the STA belongs, that is, the multicast ID that needs to be invalidated. Optionally, after receiving the multicast ID invalidation request, the AP may further send an ACK message to the STA. Correspondingly, the STA receives the ACK message sent by the AP, so as to learn in time that the AP receives the multicast ID invalidation request, which facilitates the timely invalidation of the multicast ID. In a case in which the AP is required to return the ACK message, if the STA fails to receive, within a period of time, the ACK message sent by the AP, the STA needs to send the multicast ID invalidation request to the AP again.

An optional implementation manner for sending, by the STA, the multicast ID invalidation request to the AP includes: encapsulating, by the STA by using a newly-added request message, the multicast ID invalidation request into the newly-added request message, and sending the newly-added request message to the AP.

Another optional implementation manner for sending, by the STA, the multicast ID invalidation request to the AP includes: adding, by the STA, a new IE to an existing control frame or management frame or data frame, encapsulating the multicast ID invalidation request into the newly-added IE, and sending the existing control frame or management frame or data frame to the AP.

In an optional implementation manner, the AP may further initiate changing of the multicast ID. For example, the AP sends a multicast ID change message to the STA, where the multicast ID change message includes a changed multicast ID of the multicast group to which the STA belongs. Optionally, the multicast ID change message may further include the original multicast ID of the multicast group to which the STA belongs. For a multicast group, an original multicast ID of the multicast group is a multicast ID that needs to be changed, while a new multicast ID of the multicast group is a changed multicast ID. The method in this embodiment further includes: receiving, by the STA, the multicast ID change message sent by the AP, so as to learn that the multicast ID needs to be changed and determine the changed multicast ID. Then, the STA updates the multicast ID of the multicast group, to which the STA belongs, according to the changed multicast ID, which is included in the multicast ID change message, of the multicast group to which the STA belongs. Optionally, after receiving the multicast ID change message sent by the AP, the STA may send an ACK message to the AP. On a premise that it is required to send the ACK message, if the AP fails to receive the ACK message within a period of time, the AP needs to re-send the multicast ID change message to the corresponding STA of which the ACK message fails to be received by the AP.

An optional implementation manner for sending, by the AP, the multicast ID change message to the STA includes: encapsulating, by the AP by using a newly-added management frame or control frame, the multicast ID change message into the newly-added management frame or control frame, and sending the newly-added management frame or control frame to the STA. Correspondingly, the STA receives the newly-added management frame or control frame sent by the AP, and obtains the multicast ID change message from the received newly-added management frame or control frame.

Another optional implementation manner for sending, by the AP, the multicast ID change message to the STA includes: adding, by the AP, a new IE to an existing management frame or control frame or data frame, encapsulating the multicast ID change message into the newly-added IE, and sending the existing management frame or control frame or data frame to the STA. Correspondingly, the STA receives the existing management frame or control frame or data frame sent by the AP, and obtains the multicast ID change message from the newly-added IE in the received existing management frame or control frame or data frame.

In an optional implementation manner, the changing of the multicast ID may also be initiated by the STA. Based on this, the method in this embodiment further includes that: when the STA needs to change the multicast ID, the STA may send a multicast ID change request to the AP, and then the STA receives a multicast ID change message, which is sent by the AP according to the multicast ID change request. Correspondingly, the AP receives the multicast ID change request sent by the STA, and sends a changed multicast ID to the STA according to the multicast ID change request. The multicast ID change request may include a MAC address or an IP address of the STA or other information that can uniquely identify the STA. Optionally, the AP may allocate a new multicast ID according to the information carried in the multicast ID change request, and then send the newly-allocated multicast ID as a changed multicast ID to the STA.

An optional implementation manner for sending, by the STA, the multicast ID change request to the AP includes: encapsulating, by the STA by using a request message, the multicast ID change request into the request message, and sending the request message to the AP. The request message herein may also be a newly-added message.

Another optional implementation manner for sending, by the STA, the multicast ID change request to the AP includes: adding, by the STA, a new IE to an existing control frame or management frame or data frame, encapsulating the multicast ID change request into the newly-added IE, and sending the existing control frame or management frame or data frame to the AP.

The foregoing implementation manners provide multiple implementation solutions for receiving, by the STA, the multicast ID of the multicast group to which the STA belongs, invalidating the multicast ID, and changing the multicast ID, thereby implementing management of the multicast ID. The solutions have the advantages of being simple and easy to implement.

It can be learned from the foregoing description that in multicast information receiving method provided by this embodiment, a STA receives a DTIM beacon frame sent by an AP, learns, according to the DTIM beacon frame, a multicast group that has multicast information to be sent, and then receives multicast information of a multicast group to which the STA belongs within a corresponding receiving interval according to a position of a multicast ID of the multicast group to which the STA belongs in a value order of multicast IDs of all multicast groups that have multicast information to be sent, thereby solving a problem in the prior art that each STA receives all multicast information after a beacon frame and reducing resource waste of the STA caused by this problem.

Further, an embodiment of the present invention further provides another multicast information receiving method. The method includes:
S4201: A station (STA) receives a multicast association identifier (MID), of a multicast group, sent by an access point (AP), where one multicast group has one or more MIDs, and each MID corresponds to one multicast group and a receiving period of a STA in the multicast group.
S4203: The STA receives a delivery traffic indication map (DTIM) beacon frame sent by the AP, where the DTIM beacon frame includes the MID and is used for indicating a multicast group that has multicast information to be sent to the STA.
S4205: The STA receives the multicast information of the multicast group sent by the AP, where the multicast information carries information about the MID or information associated with the MID.

In specific implementation, the STA sends an information frame for requesting a MID, where the information frame for requesting a MID is used by the AP to generate the MID.

In an embodiment, the information frame for requesting a MID includes a MID request and a MID request information element, where the MID request is used for indicating that the information frame is used for requesting a MID, and the MID request information element is used by the AP to generate the MID, of the multicast group, to be sent to the STA. The MID request information element includes: a MAC address of the multicast group, where the MAC address of the multicast group is used by the AP to allocate the MID; or a MAC address of the multicast group and a period for the STA to receive the multicast information of the multicast group, where the MAC address of the multicast group and the period for the STA to receive the multicast information of the multicast group are used by the AP to allocate the MID.

As an implementation manner, the STA adds information in the MID request information element to an association identifier AID request information element of the STA.

An embodiment of the present invention further provides still another multicast information receiving method, including:
receiving, by a station (STA), a MID of a multicast group sent by an AP, where each MID corresponds to one multicast group and a receiving period of a STA in the multicast group;
receiving, by the STA, a DTIM beacon frame sent by the AP, where a partial virtual bitmap of the DTIM beacon frame includes information indicating a MID in one or more pages, different pages include different MIDs corresponding to the same multicast group, and the different MIDs correspond to a same receiving period of a STA in the multicast group; and
receiving, by the STA, multicast information, which is sent by the AP, of the multicast group when the STA wakes up, where the multicast information carries information about the MID or information associated with the MID, and the multicast information is received by the STA.

Further, in the multicast information receiving method provided by this embodiment, an AID is used as a multicast ID, the AID used as the multicast ID can be specified by an AP, and a STA does not need to negotiate with the AP. Therefore, the present invention has greater flexibility during implementation compared with a solution in which an FMS ID is used in the prior art. In addition, the AID used as the multicast ID has no requirement on a multicast information sending period, and not only supports periodically sent multicast information but also supports randomly sent multicast information, and therefore the present invention is applicable to more application scenarios. Besides, the AID used as the multicast ID has richer resources than the FMS ID, thereby solving, to some degree, a problem that application of multicast is limited due to a limited number of multicast periods supported by the FMS ID.

The prior art provides an FMS mode. A STA working in the FMS mode may negotiate a period for listening to a DTIM beacon frame with an AP, and therefore does not need to listen to each DTIM beacon frame. However, the FMS mode can support a maximum of eight different periods, and the periods are identified by using an 8-bit FMS ID, which limits flexibility in actual application. To solve this problem, the following embodiments of the present invention provide multicast identifier sending and receiving methods, which are used to solve the problem in the prior art that application of multicast is limited due to a limited number of multicast periods supported by the FMS ID.

FIG. 8 is a flowchart of a multicast identifier sending method according to an embodiment of the present invention. This embodiment is executed by an AP. As shown in FIG. 8, the method in this embodiment includes:
Step 701: Determine a multicast identifier ID of a multicast group to which a STA belongs, where the multicast ID of the multicast group to which the STA belongs to is mapped to an AID.
Step 702: Send the multicast ID of the multicast group to which the STA belongs to the STA.

An optional implementation manner for determining, by the AP, the multicast ID of the multicast group to which the station (STA) belongs includes: mapping, by the AP, the multicast ID of the multicast group to which the STA belongs, to one AID.

Another optional implementation manner for determining, by the AP, the multicast ID of the multicast group to which the station (STA) belongs includes: mapping, by the AP, the multicast ID of the multicast group to which the STA belongs, to at least two AIDs.

Based on the foregoing description, an optional implementation manner for mapping, by the AP, the multicast ID of the multicast group to which the STA belongs, to one AID includes but is not limited to the following manners:
mapping, by the AP, the multicast ID of the multicast group to which the STA belongs, to any Page, Block, and/or Sub-block of the AID; or
mapping, by the AP, the multicast ID of the multicast group to which the STA belongs, to a pre-specified Page, Block, and/or Sub-block of the AID.

Based on the foregoing description, an optional implementation manner for mapping, by the AP, the multicast ID of the multicast group to which the STA belongs, to at least two AIDs includes but is not limited to the following manners:
mapping, by the AP, the multicast ID of the multicast group to which the STA belongs, to different Pages, Blocks, and/or Sub-blocks of the at least two AIDs; or
mapping, by the AP, the multicast ID of the multicast group to which the STA belongs, to same Pages, Blocks, and/or Sub-blocks of the at least two AIDs.

In an optional implementation manner, the AP may actively initiate allocation of the multicast ID. The AP may actively send the multicast ID of the multicast group to which the STA belongs to the corresponding STA.

In another optional implementation manner, the STA may actively request the multicast ID of the multicast group to which the STA belongs from the AP. Accordingly, an implementation manner for sending, by the AP, the multicast ID of the multicast group to which the STA belongs to the STA includes: receiving information sent by the STA and used for requesting a multicast ID, and sending, according to the information for requesting a multicast ID, the multicast ID of the multicast group to which the STA belongs to the STA.

An implementation manner for receiving, by the AP, the information sent by the STA and used for requesting a multicast ID includes: receiving, by the AP, a request message sent by the STA, where the request message includes the information for requesting a multicast ID. Optionally, the request message may be a newly-added message.

Another implementation manner for receiving, by the AP, the information sent by the STA and used for requesting a multicast ID includes: receiving, by the AP, an existing control frame or an existing management frame or an existing data frame sent by the STA, where a newly-added IE in the existing control frame or the existing management frame or the existing data frame includes the information for requesting a multicast ID.

In an optional implementation manner, an implementation manner for sending, by the AP, the multicast ID of the multicast group to which the STA belongs to the STA includes: encapsulating, by the AP, the multicast ID of the multicast group to which the STA belongs into a newly-added management frame or a newly-added control frame, and sending the newly-added management frame or the newly-added control frame to the STA.

In an optional implementation manner, another implementation manner for sending, by the AP, the multicast ID of the multicast group to which the STA belongs to the STA includes: adding, by the AP, a new IE to an existing management frame or an existing control frame or an existing data frame, encapsulating the multicast ID of the multicast group to which the STA belongs into the newly-added IE, and sending the existing management frame or the existing control frame or the existing data frame to the STA.

In an optional implementation manner, after the sending, by the AP, the multicast ID of the multicast group to which the STA belongs to the STA, the method further includes: receiving, by the AP, an ACK message sent by the STA. This helps learn in time whether the STA receives the multicast ID of the multicast group to which the STA belongs. In a case in which the STA is required to return the ACK message, if the AP fails to receive the ACK message within a period of time, the AP needs to send the multicast ID of the multicast group to which the STA belongs to the STA again.

In an optional implementation manner, the AP may further initiate a process of invalidating the multicast ID. Based on this, the method in this embodiment further includes: sending, by the AP, a multicast ID invalidation message to the STA, where the multicast ID invalidation message includes an invalidation indication for indicating invalidation of the multicast ID of the multicast group to which the STA belongs. Optionally, the multicast ID invalidation message may further include the multicast ID that needs to be invalidated, that is, the multicast ID of the multicast group to which the STA belongs.

An optional implementation manner for sending, by the AP, the multicast ID invalidation message to the STA includes: encapsulating, by the AP by using a newly-added management frame or control frame, the multicast ID invalidation message into the newly-added management frame or control frame, and sending the newly-added management frame or control frame to the STA.

Another optional implementation manner for sending, by the AP, the multicast ID invalidation message to the STA includes: adding, by the AP, a new IE to an existing management frame or control frame or data frame, encapsulating the multicast ID invalidation message into the newly-added IE, and sending the existing management frame or control frame or data frame to the STA.

In an optional implementation manner, after the sending, by the AP, the multicast ID of the multicast group to which the STA belongs to the STA, the method may further include: receiving, by the AP, a multicast ID invalidation request sent by the STA, and invalidating, according to the multicast ID invalidation request, the multicast ID of the multicast group to which the STA belongs.

In an optional implementation manner, the AP may further initiate changing of the multicast ID. Based on this, the method in this embodiment further includes: sending, by the AP, a multicast ID change message to the STA, where the multicast ID change message includes a changed multicast ID of the multicast group to which the STA belongs. Optionally, the multicast ID change message may further include the multicast ID that needs to be changed, that is, the original multicast ID of the multicast group to which the STA belongs. For a multicast group, a multicast ID that needs to be changed herein is an original multicast ID of the multicast group, while a changed multicast ID is a new multicast ID used by the multicast group.

Optionally, an implementation manner for sending, by the AP, the multicast ID change message to the STA includes: receiving, by the AP, a multicast ID change request sent by the STA, and sending the multicast ID change message to the STA according to the multicast ID change request.

An optional implementation manner for sending, by the AP, the multicast ID change message to the STA includes: encapsulating, by the AP by using a newly-added management frame or control frame, the multicast ID change message into the newly-added management frame or control frame, and sending the newly-added management frame or control frame to the STA.

Another optional implementation manner for sending, by the AP, the multicast ID change message to the STA includes: adding, by the AP, a new IE to an existing management frame or control frame or data frame, encapsulating the multicast ID change message into the newly-added IE, and sending the existing management frame or control frame or data frame to the STA.

For detailed description of the foregoing implementation manners, refer to the description of the foregoing embodiments of the multicast information sending method, and details are not described herein again.

It can be learned from the foregoing description that in the multicast identifier sending method provided by this embodiment, by using an AID as a multicast ID of a multicast group, an AP sends a multicast ID of a multicast group to which a STA belongs to the STA, so that the STA can learn the multicast ID of the multicast group to which the STA belongs. In this way, by using a feature in resource richness of the AID, a problem in the prior art that application of multicast is limited due to a limited number of multicast periods supported by an FMS ID is solved to some degree. In addition, in this embodiment, the AID is used as the multicast ID of the multicast group, the AID used as the multicast ID can be specified by the AP, and a STA does not need to negotiate with the AP. Therefore, the present invention has greater flexibility during implementation compared with a solution in which an FMS ID is used in the prior art. In addition, the AID used as the multicast ID has no requirement on a multicast information sending period, and not only supports periodically sent multicast information but also supports randomly sent multicast information, and therefore the present invention is applicable to more application scenarios.

FIG. 9 is a flowchart of a multicast identifier receiving method according to an embodiment of the present invention. As shown in FIG. 9, the method in this embodiment includes:
Step 801: A STA receives a multicast identifier ID, which is sent by an AP, of a multicast group to which the STA belongs, where the multicast ID of the multicast group to which the STA belongs to is mapped to an AID.
Step 802: The STA records the multicast ID of the multicast group to which the STA belongs.

In an optional implementation manner, the AP may initiate allocation of the multicast ID. The receiving, by a STA, a multicast identifier ID, which is sent by an AP, of a multicast group to which the STA belongs is specifically: receiving, by the STA, the multicast identifier ID, which is actively sent by the AP, of the multicast group to which the STA belongs.

In an optional implementation manner, the STA may initiate allocation of the multicast ID. The receiving, by a STA, a multicast identifier ID, which is sent by an AP, of a multicast group to which the STA belongs is specifically: sending, by the STA, information for requesting a multicast ID to the AP, and then receiving the multicast ID of the multicast group to which the STA belongs, which is sent by the AP according to the information for requesting a multicast ID.

An optional implementation manner for sending, by the STA, the information for requesting a multicast ID to the AP includes: encapsulating, by the STA, the information for requesting a multicast ID into a request message, and sending the request message to the AP. Optionally, the request message may be a newly-added message.

Another optional implementation manner for sending, by the STA, the information for requesting a multicast ID to the AP includes: adding, by the STA, a new IE to an existing control frame or an existing management frame or an existing data frame, encapsulating the information for requesting a multicast ID into the newly-added IE, and sending the existing control frame or the existing management frame or the existing data frame to the AP.

An implementation manner for receiving, by the STA, the multicast identifier ID, which is sent by the AP, of the multicast group to which the STA belongs includes: receiving, by the STA, a newly-added management frame or a newly-added control frame, where the newly-added management frame or the newly-added control frame includes the multicast ID of the multicast group to which the STA belongs.

Another implementation manner for receiving, by the STA, the multicast identifier ID, which is sent by the AP, of the multicast group to which the STA belongs includes: receiving, by the AP, an existing management frame or an existing control frame or an existing data frame sent by the STA, where a newly-added IE in the existing management frame or the existing control frame or the existing data frame includes the multicast ID of the multicast group to which the STA belongs.

In an optional implementation manner, after the receiving, by a STA, a multicast ID, which is sent by an AP, of a multicast group to which the STA belongs, the method includes: sending, by the STA, an ACK message to the AP.

In an optional implementation manner, the AP may further initiate a process of invalidating the multicast ID. Based on this, the method in this embodiment further includes: receiving, by the STA, a multicast ID invalidation message sent by the AP, where the multicast ID invalidation message includes an invalidation indication for indicating invalidation of the multicast ID of the multicast group to which the STA belongs. Optionally, after receiving the multicast ID invalidation message, the STA may send an ACK message to the AP, so as to notify the AP that the STA already receives the multicast ID invalidation message.

An optional implementation manner for sending, by the AP, the multicast ID invalidation message to the STA includes: encapsulating, by the AP by using a newly-added management frame or control frame, the multicast ID invalidation message into the newly-added management frame or control frame, and sending the newly-added management frame or control frame to the STA. Correspondingly, the STA receives the newly-added management frame or control frame sent by the AP, and obtains the multicast ID invalidation message from the received newly-added management frame or control frame.

In an optional implementation manner, the invalidation of the multicast ID may also be initiated by the STA. Based on this, the method in this embodiment further includes: when the STA needs to remove an association with the multicast group to which the STA belongs, sending, by the STA, a multicast ID invalidation request to the AP, so that the AP invalidates, according to the multicast ID invalidation request, the multicast ID of the multicast group to which the STA belongs, thereby removing the association with the multicast group.

An optional implementation manner for sending, by the STA, the multicast ID invalidation request to the AP includes: encapsulating, by the STA by using a newly-added request message, the multicast ID invalidation request into the newly-added request message, and sending the newly-added request message to the AP.

Another optional implementation manner for sending, by the STA, the multicast ID invalidation request to the AP includes: adding, by the STA, a new IE to an existing control frame or management frame or data frame, encapsulating the multicast ID invalidation request into the newly-added IE, and sending the existing control frame or management frame or data frame to the AP.

In an optional implementation manner, the AP may further initiate changing of the multicast ID. Therefore, the method in this embodiment further includes: receiving, by the STA, a multicast ID change message sent by the AP, where the multicast ID change message includes a changed multicast ID of the multicast group to which the STA belongs. The STA learns, according to the multicast ID change message, that the multicast ID needs to be changed, determines the changed multicast ID, and then updates the multicast ID of the multicast group, to which the STA belongs, according to the changed multicast ID, which is included in the multicast ID change message, of the multicast group to which the STA belongs.

In an optional implementation manner, the changing of the multicast ID may also be initiated by the STA. Based on this, an implementation manner for receiving, by the STA, the multicast ID change message sent by the AP includes that: when needing to change the multicast ID, the STA may send a multicast ID change request to the AP, and then the STA receives the multicast ID change message, which is sent by the AP according to the multicast ID change request.

An optional implementation manner for sending, by the STA, the multicast ID change request to the AP includes: encapsulating, by the STA by using a request message, the multicast ID change request into the request message, and sending the request message to the AP. The request message herein may also be a newly-added message.

Another optional implementation manner for sending, by the STA, the multicast ID change request to the AP includes: adding, by the STA, a new IE to an existing control frame or management frame or data frame, encapsulating the multicast ID change request into the newly-added IE, and sending the existing control frame or management frame or data frame to the AP.

The foregoing implementation manners provide multiple implementation solutions for receiving, by the STA, the multicast ID of the multicast group to which the STA belongs, invalidating the multicast ID, and changing the multicast ID, thereby implementing management of the multicast ID. The solutions have the advantages of being simple and easy to implement.

For detailed description of the foregoing implementation manners, refer to the description of the foregoing embodiments of the multicast information sending method, and details are not described herein again.

It can be learned from the foregoing description that in the multicast identifier receiving method provided by this embodiment, by using an AID as a multicast ID of a multicast group, a STA receives a multicast ID, which is sent by an AP, of a multicast group to which the STA belongs. In this way, by using a feature in resource richness of the AID, a problem in the prior art that application of multicast is limited due to a limited number of multicast periods supported by an FMS ID is solved to some degree. In addition, in this embodiment, the AID is used as the multicast ID of the multicast group, the AID used as the multicast ID can be specified by the AP, and a STA does not need to negotiate with the AP. Therefore, the present invention has greater flexibility during implementation compared with a solution in which an FMS ID is used in the prior art. In addition, the AID used as the multicast ID has no requirement on a multicast information sending period, and not only supports periodically sent multicast information but also supports randomly sent multicast information, and therefore the present invention is applicable to more application scenarios.

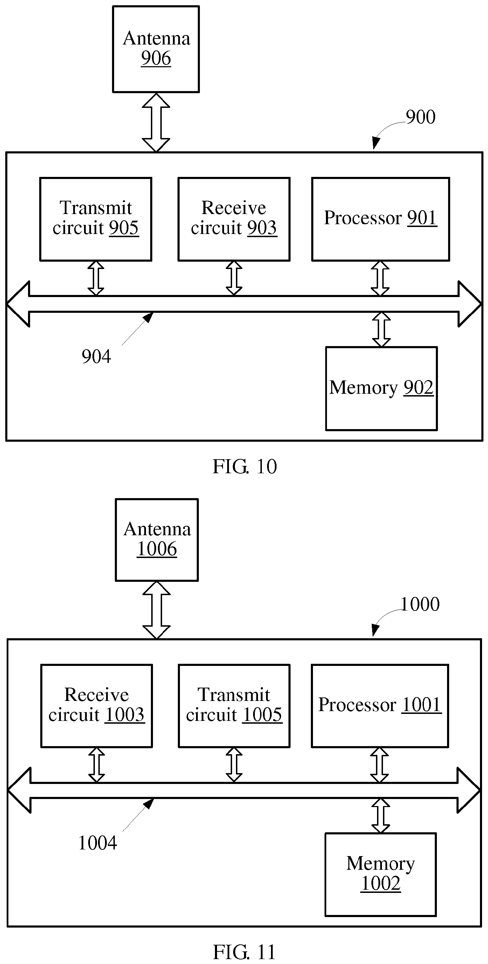

FIG. 10 is a schematic block diagram of an access point (AP) according to an embodiment of the present invention. An access point 900 in FIG. 10 at least includes: a processor 901, a memory 902, and a transmit circuit 905. The processor 901, the memory 902, and a receive circuit 903 are connected by using a bus system 904. In addition, the access point 900 may further include the receive circuit 903, an antenna 906, and the like. The processor 901 controls the access point 900, and the processor 901 may also be referred to as a central processing unit (CPU). The memory 902 may include a read only memory and a random access memory, and provide an instruction and data to the processor 901. A part of the memory 902 may further include a non-volatile random access memory (NVRAM). In specific application, the receive circuit 903 and the transmit circuit 905 may be coupled to the antenna 906. The components of the access point 900 may be coupled together by using the bus system 904. In addition a data bus, the bus system 904 may further include a power bus, a control bus, a status signal bus, and the like. However, for clear description, various types of buses are collectively marked as the bus system 904 in the figure.

The method disclosed in the foregoing embodiments of the present invention may be applied in the processor 901, or is implemented by the processor 901 in cooperation with various functional circuits or components. The processor 901 may be an integrated circuit chip having a signal processing capacity. In an implementation process, the steps of the foregoing method may be performed by using a hardware integrated logic circuit in the processor 901 or an instruction in a form of software. The processor 901 may be a general processor, a digital signal processor (DSP), an application-specific integrated circuit (ASIC), a field-programmable gate array (FPGA), another programmable logic device, a discrete gate or a transistor logic device, or a discrete hardware component. The processor can implement or control execution of the methods, the steps, and the logic block diagrams disclosed in the embodiments of the present invention. The general processor may be a microprocessor, or the processor may also be any conventional processor. The steps with reference to the methods disclosed in the embodiments of the present invention may be directly performed by a hardware decoding processor, or may be performed by using a combination of hardware and software modules in a decoding processor. The software module may be located in a mature storage medium in the art, such as a random access memory, a flash memory, a read only memory, a programmable read only memory, an electrically erasable programmable memory, or a register. The storage medium is located in the memory 902, and the processor 901 reads information from the memory 902 and implements the steps of the foregoing method in combination with hardware of the processor 901.

In this embodiment, the processor 901 is configured to generate a multicast association identifier (MID) of a multicast group and a delivery traffic indication map (DTIM) beacon frame.

The transmit circuit 905 sends the multicast association identifier (MID) of the multicast group, the delivery traffic indication map (DTIM) beacon frame, and multicast information of a multicast group by using an antenna.

One multicast group has one or more MIDs, and each MID corresponds to one multicast group and a receiving period of a STA in the multicast group; the DTIM beacon frame includes the MID and is used for indicating a multicast group that has multicast information to be sent to the STA; and the multicast information carries information about the MID or information associated with the MID, and the multicast information is received by the STA. When a STA is in a sleep mode, the STA wakes up to receive the multicast information. A MID indicates a multicast group that has multicast information to be sent to the STA, so that the STA wakes up to receive the multicast information.

Further, the receive circuit 903 is configured to receive, by using the antenna, an information frame sent by the STA and used for requesting a MID; and the processor generates the multicast association identifier (MID) of the multicast group according to the information frame for requesting a MID.

In this embodiment, the information for requesting a MID includes a MID request and a MID request information element, where the MID request is used for indicating that the information frame is used for requesting a MID, and the MID request information element includes: a MAC address of the multicast group; and the processor 905 allocates the MID according to the MAC address of the multicast group.

In a specific embodiment, the processor 905 adds information in the MID request information element to an AID request information element of the STA. During implementation, a MID response frame includes MID response information and a MID response information element, where the MID response information indicates that the information frame is a MID response frame, and the response information element carries information about the MID of the multicast group to which the STA belongs. Further, the response information element carries the MAC address of the multicast group, a period in which receiving the multicast information is allowed, and a MID valid time. The processor 905 adds information in the MID response information element to an association identifier response information element of the AP.

FIG. 11 is a schematic block diagram of an access point (AP) according to another embodiment of the present invention. The access point 1000 in FIG. 11 at least includes: a processor 1001, a memory 1002, and a transmit circuit 1005. The processor 1001, the memory 1002, and a receive circuit 1003 are connected by using a bus system 1004. In addition, the access point 1000 may further include the receive circuit 1003, an antenna 1006, and the like. The processor 1001 controls the access point 1000, and the processor 1001 may also be referred to as a central processing unit (CPU). The memory 1002 may include a read only memory and a random access memory, and provide an instruction and data to the processor 1001. A part of the memory 1002 may further include a non-volatile random access memory (NVRAM). In specific application, the receive circuit 1003 and the transmit circuit 1005 may be coupled to the antenna 1006. The components of the access point 1000 may be coupled together by using the bus system 1004. In addition a data bus, the bus system 1004 may further include a power bus, a control bus, a status signal bus, and the like. However, for clear description, various types of buses are collectively marked as the bus system 1004 in the figure.

The method disclosed in the foregoing embodiments of the present invention may be applied in the processor 1001, or is implemented by the processor 1001 in cooperation with various functional circuits or components. The processor 1001 may be an integrated circuit chip having a signal processing capacity. In an implementation process, the steps of the foregoing method may be performed by using a hardware integrated logic circuit in the processor 1001 or an instruction in a form of software. The processor 1001 may be a general processor, a digital signal processor (DSP), an application-specific integrated circuit (ASIC), a field-programmable gate array (FPGA), another programmable logic device, a discrete gate or a transistor logic device, or a discrete hardware component. The processor can implement or control execution of the methods, the steps, and the logic block diagrams disclosed in the embodiments of the present invention. The general processor may be a microprocessor, or the processor may also be any conventional processor. The steps with reference to the methods disclosed in the embodiments of the present invention may be directly performed by a hardware decoding processor, or may be performed by using a combination of hardware and software modules in a decoding processor. The software module may be located in a mature storage medium in the art, such as a random access memory, a flash memory, a read only memory, a programmable read only memory, an electrically erasable programmable memory, or a register. The storage medium is located in the memory 1002, and the processor 1001 reads information from the memory 1002 and implements the steps of the foregoing method in combination with hardware of the processor 1001.

In the access point in this embodiment of the present invention, the processor 1001 is configured to generate a MID of a multicast group and a DTIM beacon frame.

The transmit circuit 1005 is configured to send the multicast association identifier (MID) of the multicast group, the delivery traffic indication map (DTIM) beacon frame, and multicast information of the multicast group by using the antenna 1006, where each MID corresponds to one multicast group and a receiving period of a STA in the multicast group; a partial virtual bitmap of the DTIM beacon frame includes information indicating a MID in one or more pages, different pages include different MIDs corresponding to the same multicast group, and the different MIDs correspond to a same receiving period of a STA in the multicast group; and the multicast information carries information about the MID or information associated with the MID, and the multicast information is received by the STA.

Further, the receive circuit 1003 is configured to receive, by using the antenna, an information frame sent by the STA and used for requesting a MID; and the processor 1001 generates the multicast association identifier (MID) of the multicast group according to the information frame for requesting a MID.

Further, the information for requesting a MID includes a MID request and a MID request information element, where the MID request is used for indicating that the information frame is used for requesting a MID, and the MID request information element includes: a MAC address of the multicast group; and the processor 1001 allocates the MID according to the MAC address of the multicast group.

In a specific embodiment, the processor 1001 adds information in the MID request information element to an AID request information element of the STA. During implementation, a MID response frame includes MID response information and a MID response information element, where the MID response information indicates that the information frame is a MID response frame, and the response information element carries information about the MID of the multicast group to which the STA belongs. Further, the response information element carries the MAC address of the multicast group, a period in which receiving the multicast information is allowed, and a MID valid time. The processor 905 adds information in the MID response information element to an association identifier response information element of the AP.

The access point (AP) in this embodiment of the present invention may implement the steps or the functions in the foregoing method embodiments. The access point (AP) implements the multicast information sending method according to the specific processes of the foregoing method embodiments. Therefore, the method in the foregoing method embodiments completely can be implemented by the access point.

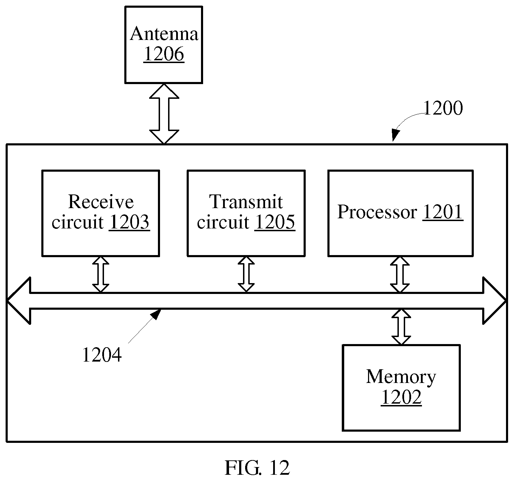

Further, an embodiment of the present invention further provides a station (STA). FIG. 12 is a schematic block diagram of a station (STA) according to an embodiment of the present invention. The station 1200 in FIG. 12 at least includes: a processor 1201, a memory 1202, and a transmit circuit 1205. The processor 1201, the memory 1202, and a receive circuit 1203 are connected by using a bus system 1204. In addition, the station 1200 may further include the receive circuit 1203, an antenna 1206, and the like. The processor 1201 controls the station 1200, and the processor 1201 may also be referred to as a central processing unit (CPU). The memory 1202 may include a read only memory and a random access memory, and provide an instruction and data for the processor 1201. A part of the memory 1202 may further include a non-volatile random access memory (NVRAM). In specific application, the receive circuit 1203 and the transmit circuit 1205 may be coupled to the antenna 1206. The components of the access point 1200 may be coupled together by using the bus system 1204. In addition to a data bus, the bus system 1204 may further include a power bus, a control bus, a status signal bus, and the like. However, for clear description, various types of buses are collectively marked as the bus system 1204 in the figure.

The method disclosed in the foregoing embodiment of the present invention may be applied in the processor 1201, or is implemented by the processor 1201 in cooperation with various functional circuits or components. The processor 1201 may be an integrated circuit chip having a signal processing capacity. In an implementation process, the steps of the foregoing method may be performed by using a hardware integrated logic circuit in the processor 1201 or an instruction in a form of software. The processor 1201 may be a general processor, a digital signal processor (DSP), an application-specific integrated circuit (ASIC), a field-programmable gate array (FPGA), another programmable logic device, a discrete gate or a transistor logic device, or a discrete hardware component. The processor can implement or control execution of the methods, the steps, and the logic block diagrams disclosed in the embodiments of the present invention. The general processor may be a microprocessor, or the processor may also be any conventional processor. The steps with reference to the methods disclosed in the embodiments of the present invention may be directly performed by a hardware decoding processor, or may be performed by using a combination of hardware and software modules in a decoding processor. The software module may be located in a mature storage medium in the art, such as a random access memory, a flash memory, a read only memory, a programmable read only memory, an electrically erasable programmable memory, or a register. The storage medium is located in the memory 1202, and the processor 1201 reads information from the memory 1202 and implements the steps of the foregoing method in combination with hardware of the processor 1201.

The station in this embodiment includes:
the receive circuit 1203, receive, by using an antenna, a multicast association identifier (MID) of a multicast group, a delivery traffic indication map DTIM beacon frame, and multicast information of a multicast group which are sent by an AP, where one multicast group has one or more MIDs, each MID corresponds to one multicast group and a receiving period of the STA in the multicast group, and the DTIM beacon frame includes the MID and is used for indicating a multicast group that has multicast information to be sent to the STA; and
the processor 1201, configured to wake the STA according to the MID and the DTIM beacon frame, so that the receive circuit receives multicast information of the multicast group.

Further, the STA further includes:
the transmit circuit 1205, configured to send, by using the antenna, an information frame for requesting a MID, where the information frame for requesting a MID is used by the AP to generate the MID.

As another specific implementation manner, still referring to FIG. 12, the station includes:
the receive circuit, configured to receive, by using the antenna, a multicast association identifier (MID) of a multicast group, a delivery traffic indication map DTIM beacon frame, and multicast information of a multicast group which are sent by an AP, where
each MID corresponds to one multicast group and a receiving period of a STA in the multicast group; and a partial virtual bitmap of the DTIM beacon frame includes information indicating a MID in one or more pages, different pages include different MIDs corresponding to the same multicast group, and the different MIDs correspond to a same receiving period of a STA in the multicast group; and
the processor, configured to enable, according to the MID and the DTIM beacon frame, the receive circuit to receive the multicast information of the multicast group.

The manner in which the STA in this embodiment receives the MID and the DTIM beacon frame is different from that in the foregoing embodiment.

In the multicast identifier sending and receiving methods and devices provided by the embodiments of the present invention, by using a AID as a multicast ID of a multicast group, an AP sends a MID of a multicast group to which a STA belongs to the STA, thereby solving, to some degree, a problem in the prior art that application of multicast is limited due to a limited number of multicast periods supported by an FMS ID.

A person skilled in the art may be aware that, in combination with the examples described in the embodiments disclosed in this specification, the steps and units of the methods may be implemented by electronic hardware, computer software, or a combination thereof. To clearly describe the interchangeability between the hardware and the software, the foregoing has generally described steps and compositions of the embodiments according to functions. Whether the functions are performed by hardware or software depends on particular applications and design constraint conditions of the technical solutions.

## Claims

1. A multicast information sending method, wherein the method comprises:
sending, by an access point, AP, a multicast association identifier, MID, of a multicast group to a station STA, wherein the multicast group has more than one MIDs, and each MID corresponds to one multicast group and a receiving period of the STA in the multicast group;
sending, by the AP, a delivery traffic indication map, DTIM, beacon frame to the STA, wherein the DTIM beacon frame comprises the MID which is the one sent to the STA and is one of the more than one MIDs, and the DTIM beacon frame is used for indicating the multicast group that has multicast information to be sent to the STA; and
sending, by the AP, at different periods, the multicast information of the multicast group to one or more STAs, wherein the multicast information carries information about the MIDs which are the ones sent to the STAs or information associated with the MIDs which are the ones sent to the STAs, wherein this information is same across periods.

2. The multicast information sending method according to claim 1, before the sending, by an AP, a MID of a multicast group to a STA, comprising:
receiving an information frame sent by the STA and used for requesting a MID, wherein
the sending a MID of a multicast group to a STA comprises:
sending, by the AP according to the received information frame for requesting a MID, a MID of a multicast group to which the STA belongs to the STA.

3. The multicast information sending method according to claim 2, wherein the information frame for requesting a MID comprises a MID request information element; and
before the AP sends the MID of the multicast group to the station, STA, the AP generates the MID, to be sent to the STA, of the multicast group according to the MID request information element.

4. The multicast information sending method according to claim 3, wherein the MID request information element comprises:
a MAC address of the multicast group and a period for the STA to receive the multicast information of the multicast group, wherein the AP allocates the MID according to the MAC address of the multicast group and the period for the STA to receive the multicast information of the multicast group.

5. The multicast information sending method according to any one of claims 3 to 4, wherein
information in the MID request information element is carried by an AID request information element of the STA.

6. The multicast information sending method according to any one of claims 2 to 5, wherein
the MID of the multicast group to which the STA belongs is encapsulated into a MID response frame, wherein the MID response frame comprises a MID response information element, and the MID response information element carries information about the MID of the multicast group to which the STA belongs.

7. The multicast information sending method according to claim 6, wherein
the MID response information element carries the MAC address of the multicast group, a period in which receiving the multicast information is allowed, and a MID valid time.

8. The multicast information sending method according to claim 6, wherein information in the MID response information element is carried by an association identifier response information element of the AP.

9. An access point, wherein the access point comprises:
a processor, configured to generate a multicast association identifier, MID, of a multicast group and a delivery traffic indication map, DTIM, beacon frame and multicast information of the multicast group;
wherein the multicast group has more than one MIDs, each MID corresponds to both of the multicast group and a receiving period of the STA in the multicast group;
the DTIM beacon frame comprises the MID which is the one sent to the STA and is one of the more than one MIDs, and the DTIM beacon frame is used for indicating a multicast group that has multicast information to be sent to the STA;
the multicast information carries information about the MID which is the one sent to the STA and is one of the more than one MIDs, or information associated with the MID which is the one sent to the STA and is one of the more than one MIDs;
a transmit circuit, configured to send, at different periods, the multicast association identifier, MID, of the multicast group, the delivery traffic indication map, DTIM, beacon frame, and multicast information of the multicast group by using an antenna, wherein the information across periods is the same.

10. The access point according to claim 9, wherein the access point further comprises:
a receive circuit, configured to receive, by using the antenna, an information frame sent by the STA and used for requesting a MID; and
the processor generates the multicast association identifier, MID, of the multicast group according to the information frame for requesting a MID.

11. The access point according to claim 10, wherein the information frame for requesting a MID comprises a MID request information element, wherein the MID request information element comprises a MAC address of the multicast group; and
the processor allocates the MID according to the MAC address of the multicast group.

12. A multicast information receiving method, wherein the method comprises:
receiving, by a station, STA, a multicast association identifier, MID, of a multicast group sent by an access point, AP, wherein one multicast group has more than one MIDs, and each MID corresponds to one multicast group and a receiving period of the STA in the multicast group;
receiving, by the STA, a delivery traffic indication map, DTIM, beacon frame sent by the AP, wherein the DTIM beacon frame comprises the MID which is the one sent to the STA and is one of the more than one MIDs, and the DTIM beacon frame is used for indicating the multicast group that has multicast information to be sent to the STA;
and
receiving, by the STA, the multicast information of the multicast group sent by the AP, wherein a period of receiving the multicast information of the multicast group by the STA is different from a period of receiving the multicast information of the multicast group by another STA, wherein the multicast information carries information about the MIDs which are the ones sent to STAs or information associated with the MIDs which are the ones sent to the STAs, wherein the STAs including the STA and the another STA.

13. The method according to claim 12, wherein the method further comprises:
sending, by the STA, an information frame for requesting a MID to the AP, wherein the information frame for requesting a MID is used by the AP to generate the MID.

14. The method according to claim 12 or 13, wherein the method further comprises:
the information frame for requesting a MID comprises a MID request information element, wherein the MID request information element is used by the AP to generate the MID, of the multicast group, to be sent to the STA.

15. The method according to claim 14, wherein the MID request information element comprises:
a MAC address of the multicast group and a period for the STA to receive the multicast information of the multicast group, wherein the MAC address of the multicast group and the period for the STA to receive the multicast information of the multicast group are used by the AP to allocate the MID.

16. The method according to any one of claims 12 to 15, wherein
the STA adds information in the MID request information element to an association identifier AID request information element of the STA.

17. A station, STA, and another STA, configured to perform the multicast information receiving method of claim 12.

18. The STA and another STA according to claim 17, wherein the STA is further configured to send an information frame for requesting a MID, wherein the information frame for requesting a MID is used by the AP to generate the MID.

## Patentansprüche

1. Multicastinformationssendeverfahren, wobei das Verfahren Folgendes umfasst:
Senden durch einen Zugangspunkt, AP, einer Multicastverknüpfungskennung, MID, einer Multicastgruppe an eine Station STA, wobei die Multicastgruppe mehr als eine MID aufweist und jede MID einer Multicastgruppe und einer Empfangsperiode der STA in der Multicastgruppe entspricht;
Senden durch den AP eines Lieferverkehrsanzeigekarten(DTIM)-Funkfeuerrahmens an die STA, wobei der DTIM-Funkfeuerrahmen die MID umfasst, die diejenige ist, die an die STA gesendet wurde, und eine der mehr als einen MIDs ist, und der DTIM-Funkfeuerrahmen zum Anzeigen der Multicastgruppe, die Multicastinformationen aufweist, die an die STA zu senden sind, verwendet wird; und
Senden durch den AP der Multicastinformationen der Multicastgruppe in verschiedenen Perioden an eine oder mehrere STAs, wobei die Multicastinformationen Informationen über die MIDs, die diejenigen sind, die an die STAs gesendet werden, oder Informationen, die mit den MIDs, die diejenigen sind, die an die STAs gesendet werden, verknüpft sind, transportieren, wobei diese Informationen über die Perioden dieselben sind.

2. Multicastinformationssendeverfahren nach Anspruch 1, das vor dem Senden durch einen AP einer MID einer Multicastgruppe an eine STA Folgendes umfasst:
Empfangen eines Informationsrahmens, der von der STA gesendet wurde und zum Anfordern einer MID verwendet wird, wobei das Senden einer MID einer Multicastgruppe an eine STA Folgendes umfasst:
Senden durch den AP gemäß dem empfangenen Informationsrahmen zum Anfordern einer MID, einer MID einer Multicastgruppe, zu der die STA gehört, an die STA.

3. Multicastinformationssendeverfahren nach Anspruch 2, wobei der Informationsrahmen zum Anfordern einer MID ein MID-Anforderungsinformationselement umfasst und
bevor der AP die MID der Multicastgruppe an die Station, STA, sendet, der AP die MID, die an die STA zu senden ist, der Multicastgruppe gemäß dem MID-Anforderungsinformationselement erzeugt.

4. Multicastinformationssendeverfahren nach Anspruch 3, wobei das MID-Anforderungsinformationselement Folgendes umfasst:
eine MAC-Adresse der Multicastgruppe und eine Periode, in der die STA die Multicastinformationen der Multicastgruppe empfängt, wobei der AP die MID gemäß der MAC-Adresse der Multicastgruppe und der Periode, in der die STA die Multicastinformationen der Multicastgruppe empfängt, zuordnet.

5. Multicastinformationssendeverfahren nach einem der Ansprüche 3 bis 4, wobei Informationen im MID-Anforderungsinformationselement von einem AID-Anforderungsinformationselement der STA transportiert werden.

6. Multicastinformationssendeverfahren nach einem der Ansprüche 2 bis 5, wobei die MID der Multicastgruppe, zu der die STA gehört, in einen MID-Antwortrahmen gekapselt wird, wobei der MID-Antwortrahmen ein MID-Antwortinformationselement umfasst und das MID-Antwortinformationselement Informationen über die MID der Multicastgruppe, zu der die STA gehört, transportiert.

7. Multicastinformationssendeverfahren nach Anspruch 6, wobei das MID-Antwortinformationselement die MAC-Adresse der Multicastgruppe, eine Periode, in der das Empfangen der Multicastinformationen erlaubt ist, und eine MID-Gültigkeitszeit transportiert.

8. Multicastinformationssendeverfahren nach Anspruch 6, wobei Informationen im MID-Antwortinformationselement von einem Verknüpfungskennungsantwortinformationselement des AP transportiert werden.

9. Zugangspunkt, wobei der Zugangspunkt Folgendes umfasst:
einen Prozessor, der dazu ausgelegt ist, eine Multicastverknüpfungskennung, MID, einer Multicastgruppe und einen Lieferverkehrsanzeigekarten(DTIM)-Funkfeuerrahmen und Multicastinformationen der Multicastgruppe zu erzeugen;
wobei die Multicastgruppe mehr als eine MID aufweist, jede MID sowohl der Multicastgruppe als auch einer Empfangsperiode der STA in der Multicastgruppe entspricht;
der DTIM-Funkfeuerrahmen die MID umfasst, die diejenige ist, die an die STA gesendet wurde, und eine der mehr als einen MIDs ist, und der DTIM-Funkfeuerrahmen zum Anzeigen einer Multicastgruppe, die Multicastinformationen aufweist, die an die STA zu senden sind, verwendet wird;
die Multicastinformationen Informationen über die MID, die diejenige ist, die an die STA gesendet wurde, und eine der mehr als einen MIDs ist, oder Informationen, die mit der MID verknüpft sind, die diejenige ist, die an die STA gesendet wurde, und eine der mehr als einen MIDs ist, transportieren;
eine Übertragungsschaltung, die dazu ausgelegt ist, die Multicastverknüpfungskennung, MID, der Multicastgruppe, den Lieferverkehrsanzeigekarten(DTIM)-Funkfeuerrahmen und Multicastinformationen der Multicastgruppe unter Verwendung einer Antenne in verschiedenen Perioden zu senden, wobei die Informationen über die Perioden dieselben sind.

10. Zugangspunkt nach Anspruch 9, wobei der Zugangspunkt ferner Folgendes umfasst:
eine Empfangsschaltung, die dazu ausgelegt ist, unter Verwendung der Antenne einen Informationsrahmen zu empfangen, der von der STA gesendet wurde und zum Anfordern einer MID verwendet wird; und
der Prozessor erzeugt die Multicastverknüpfungskennung, MID, der Multicastgruppe gemäß dem Informationsrahmen zum Anfordern einer MID.

11. Zugangspunkt nach Anspruch 10, wobei der Informationsrahmen zum Anfordern einer MID ein MID-Anforderungsinformationselement umfasst, wobei das MID-Anforderungsinformationselement eine MAC-Adresse der Multicastgruppe umfasst und
der Prozessor die MID gemäß der MAC-Adresse der Multicastgruppe zuordnet.

12. Multicastinformationsempfangsverfahren, wobei das Verfahren Folgendes umfasst:
Empfangen durch eine Station, STA, einer Multicastverknüpfungskennung, MID, einer Multicastgruppe, die von einem Zugangspunkt, AP, gesendet wurde, wobei eine Multicastgruppe mehr als eine MID aufweist und jede MID einer Multicastgruppe und einer Empfangsperiode der STA in der Multicastgruppe entspricht;
Empfangen durch die STA eines Lieferverkehrsanzeigekarten(DTIM)-Funkfeuerrahmens, der vom AP gesendet wurde, wobei der DTIM-Funkfeuerrahmen die MID umfasst, die diejenige ist, die an die STA gesendet wurde, und eine der mehr als einen MIDs ist, und der DTIM-Funkfeuerrahmen zum Anzeigen der Multicastgruppe, die Multicastinformationen aufweist, die an die STA zu senden sind, verwendet wird; und
Empfangen durch die STA der Multicastinformationen der Multicastgruppe, die vom AP gesendet wurden, wobei sich eine Periode des Empfangens der Multicastinformationen der Multicastgruppe durch die STA von einer Periode des Empfangens der Multicastinformationen der Multicastgruppe durch eine weitere STA unterscheidet, wobei die Multicastinformationen Informationen über die MIDs, die diejenigen sind, die an STAs gesendet wurden, oder Informationen, die mit den MIDs, die diejenigen sind, die an die STAs gesendet wurden, verknüpft sind, transportieren, wobei die STAs die STA und die weitere STA umfassen.

13. Verfahren nach Anspruch 12, wobei das Verfahren ferner Folgendes umfasst:
Senden durch die STA eines Informationsrahmens zum Anfordern einer MID an den AP, wobei der Informationsrahmen zum Anfordern einer MID vom AP zum Erzeugen der MID verwendet wird.

14. Verfahren nach Anspruch 12 oder 13, wobei das Verfahren ferner Folgendes umfasst:
der Informationsrahmen zum Anfordern einer MID umfasst ein MID-Anforderungsinformationselement, wobei das MID-Anforderungsinformationselement vom AP verwendet wird, um die MID der Multicastgruppe, die an die STA zu senden ist, zu erzeugen.

15. Verfahren nach Anspruch 14, wobei das MID-Anforderungsinformationselement Folgendes umfasst:
eine MAC-Adresse der Multicastgruppe und eine Periode, in der die STA die Multicastinformationen der Multicastgruppe empfängt, wobei die MAC-Adresse der Multicastgruppe und die Periode, in der die STA die Multicastinformationen der Multicastgruppe empfängt, vom AP zum Zuordnen der MID verwendet werden.

16. Verfahren nach einem der Ansprüche 12 bis 15, wobei
die STA Informationen im MID-Anforderungsinformationselement zu einem Verknüpfungskennungs(AID)-Anforderungsinformationselement der STA hinzufügt.

17. Station, STA, und eine weitere STA, die dazu ausgelegt sind, das Multicastinformationsempfangsverfahren nach Anspruch 12 durchzuführen.

18. STA und eine weitere STA nach Anspruch 17, wobei die STA ferner dazu ausgelegt ist, einen Informationsrahmen zum Anfordern einer MID zu senden, wobei der Informationsrahmen zum Anfordern einer MID vom AP zum Erzeugen der MID verwendet wird.

## Revendications

1. Procédé d'envoi d'informations de multidiffusion, le procédé consistant à :
envoyer, par un point d'accès (AP), un identifiant d'association de multidiffusion (MID) d'un groupe de multidiffusion à une station (STA), le groupe de multidiffusion ayant de multiples MID, et chaque MID correspondant à un groupe de multidiffusion et à une période de réception de la STA dans le groupe de multidiffusion ;
envoyer, par l'AP, une trame de balise de carte de signalisation de trafic de distribution (DTIM) à la STA, la trame de balise DTIM comprenant le MID qui est envoyé à la STA et qui est un des multiples MID, et la trame de balise DTIM étant utilisée pour signaler le groupe de multidiffusion qui a une information de multidiffusion qui doit être envoyée à la STA ; et
envoyer, par l'AP, à différentes périodes, l'information de multidiffusion du groupe de multidiffusion à une ou plusieurs STA, l'information de multidiffusion transportant une information sur les MID qui sont envoyés aux STA ou une information associée aux MID qui sont envoyés aux STA, cette information étant la même sur toutes les périodes.

2. Procédé d'envoi d'informations de multidiffusion selon la revendication 1, consistant, avant l'envoi, par un AP, d'un MID d'un groupe de multidiffusion à une STA, à :
recevoir une trame d'information envoyée par la STA et utilisée pour demander un MID, l'envoi d'un MID d'un groupe de multidiffusion à une STA consistant à :
envoyer, par l'AP selon la trame d'information reçue pour demander un MID, un MID d'un groupe de multidiffusion auquel la STA appartient à la STA.

3. Procédé d'envoi d'informations de multidiffusion selon la revendication 2, dans lequel la trame d'information pour demander un MID comprend un élément d'information de demande de MID ; et
avant l'envoi du MID du groupe de multidiffusion à la station (STA) par l'AP, l'AP génère le MID, qui doit être envoyé à la STA, du groupe de multidiffusion selon l'élément d'information de demande de MID.

4. Procédé d'envoi d'informations de multidiffusion selon la revendication 3, dans lequel l'élément d'information de demande de MID comprend :
une adresse MAC du groupe de multidiffusion et une période de la STA pour recevoir l'information de multidiffusion du groupe de multidiffusion, l'AP attribuant le MID selon l'adresse MAC du groupe de multidiffusion et la période de la STA pour recevoir l'information de multidiffusion du groupe de multidiffusion.

5. Procédé d'envoi d'informations de multidiffusion selon l'une quelconque des revendications 3 et 4, dans lequel une information dans l'élément d'information de demande de MID est transportée par un élément d'information de demande d'AID de la STA.

6. Procédé d'envoi d'informations de multidiffusion selon l'une quelconque des revendications 2 à 5, dans lequel le MID du groupe de multidiffusion auquel la STA appartient est encapsulé dans une trame de réponse de MID, la trame de réponse de MID comprenant un élément d'information de réponse de MID, et l'élément d'information de réponse de MID transportant une information sur le MID du groupe de multidiffusion auquel la STA appartient.

7. Procédé d'envoi d'informations de multidiffusion selon la revendication 6, dans lequel l'élément d'information de réponse de MID transporte l'adresse MAC du groupe de multidiffusion, une période pendant laquelle la réception de l'information de multidiffusion est autorisée, et une durée de validité de MID.

8. Procédé d'envoi d'informations de multidiffusion selon la revendication 6, dans lequel une information dans l'élément d'information de réponse de MID est transportée par un élément d'information de réponse d'identifiant d'association de l'AP.

9. Point d'accès, le point d'accès comprenant :
un processeur, configuré pour générer un identifiant d'association de multidiffusion (MID) d'un groupe de multidiffusion, et une trame de balise de carte de signalisation de distribution (DTIM) et une information de multidiffusion du groupe de multidiffusion ;
le groupe de multidiffusion ayant de multiples MID, et chaque MID correspondant au groupe de multidiffusion et à une période de réception de la STA dans le groupe de multidiffusion ;
la trame de balise DTIM comprenant le MID qui est envoyé à la STA et qui est un des multiples MID, et la trame de balise DTIM étant utilisée pour signaler un groupe de multidiffusion qui a une information de multidiffusion qui doit être envoyée à la STA;
l'information de multidiffusion transportant une information sur le MID qui est envoyé à la STA et qui est un des multiples MID, ou une information associée au MID qui est envoyé à la STA et qui est un des multiples MID ;
un circuit d'émission, configuré pour envoyer, à différentes périodes, l'identifiant d'association de multidiffusion (MID) du groupe de multidiffusion, la trame de balise de carte de signalisation de trafic de distribution (DTIM) et une information de multidiffusion du groupe de multidiffusion au moyen d'une antenne, l'information étant la même sur toutes les périodes.

10. Point d'accès selon la revendication 9, le point d'accès comprenant en outre :
un circuit de réception, configuré pour recevoir, au moyen de l'antenne, une trame d'information envoyée par la STA et utilisée pour demander un MID ; et
le processeur générant l'identifiant d'association de multidiffusion (MID) du groupe de multidiffusion selon la trame d'information pour demander un MID.

11. Point d'accès selon la revendication 10, dans lequel la trame d'information pour demander un MID comprend un élément d'information de demande de MID, l'élément d'information de demande de MID comprend une adresse MAC du groupe de multidiffusion ; et
le processeur attribue le MID selon l'adresse MAC du groupe de multidiffusion.

12. Procédé de réception d'informations de multidiffusion, le procédé consistant à :
recevoir, par une station (STA), un identifiant d'association de multidiffusion (MID) d'un groupe de multidiffusion envoyé par un point d'accès (AP), un groupe de multidiffusion ayant de multiples MID, et chaque MID correspondant à un groupe de multidiffusion et à une période de réception de la STA dans le groupe de multidiffusion ;
recevoir, par la STA, une trame de balise de carte de signalisation de trafic de distribution (DTIM) envoyée par l'AP, la trame de balise DTIM comprenant le MID qui est envoyé à la STA et qui est un des multiples MID, et la trame de balise DTIM étant utilisée pour signaler le groupe de multidiffusion qui a une information de multidiffusion qui doit être envoyée à la STA ;
et
recevoir, par la STA, l'information de multidiffusion du groupe de multidiffusion envoyée par l'AP, une période de réception, par la STA, de l'information de multidiffusion du groupe de multidiffusion étant différente d'une période de réception, par une autre STA, de l'information de multidiffusion du groupe de multidiffusion, l'information de multidiffusion transportant une information sur les MID qui sont envoyés à des STA ou une information associée aux MID qui sont envoyés aux STA, les STA comportant la STA et l'autre STA.

13. Procédé selon la revendication 12, le procédé consistant en outre à :
envoyer, par la STA, une trame d'information pour demander un MID à l'AP, la trame d'information pour demander un MID étant utilisée par l'AP pour générer le MID.

14. Procédé selon la revendication 12 ou 13, dans lequel :
la trame d'information pour demander un MID comprend un élément d'information de demande de MID, l'élément d'information de demande de MID étant utilisé par l'AP pour générer le MID, du groupe de multidiffusion, qui doit être envoyé à la STA.

15. Procédé selon la revendication 14, dans lequel l'élément d'information de demande de MID comprend :
une adresse MAC du groupe de multidiffusion et une période de la STA pour recevoir l'information de multidiffusion du groupe de multidiffusion, l'adresse MAC du groupe de multidiffusion et la période de la STA pour recevoir l'information de multidiffusion du groupe de multidiffusion étant utilisées par l'AP pour attribuer le MID.

16. Procédé selon l'une quelconque des revendications 12 à 15, dans lequel la STA ajoute une information dans l'élément d'information de demande de MID à un élément d'information de demande d'identifiant d'association (AID) de la STA.

17. Station (STA), et une autre STA, configurées pour effectuer le procédé de réception d'informations de multidiffusion selon la revendication 12.

18. STA et une autre STA selon la revendication 17, la STA étant configurée en outre pour envoyer une trame d'information pour demander un MID, la trame d'information pour demander un MID étant utilisée par l'AP pour générer le MID.
